# EUROPÄISCHE PATENTSCHRIFT

(11) **EP 0 874 949 B1**
(45) Veröffentlichungstag und Bekanntmachung des Hinweises auf die Patenterteilung: **15.12.1999**
(21) Anmeldenummer: 97943899.1
(22) Anmeldetag: 24.09.1997
(51) Int. Cl.: F01C 1/44

(54) **SCHWENKKOLBENMASCHINE**
OSCILLATING PISTON ENGINE
MOTEUR A PISTON OSCILLANT

(30) Priorität: 26.09.1996 DE 19639503
(43) Veröffentlichungstag der Anmeldung: 04.11.1998
(73) Patentinhaber: Hüttlin, Herbert, 79539 Lörrach (DE)
(72) Erfinder: Hüttlin, Herbert, 79539 Lörrach (DE)
(74) Vertreter: Steil, Christian, Dipl.-Ing.
(86) Internationale Anmeldenummer: EP9705245
(87) Internationale Veröffentlichungsnummer: WO9813583

(56) Entgegenhaltungen:
- WO-A-93/01395
- DE-A- 1 551 101
- GB-A- 1 500 619
- US-A- 5 304 049

## Beschreibung

Die Erfindung betrifft eine Schwenkkolbenmaschine, mit einem Gehäuse mit einer kreisförmigen Innenwand, in dem mehrere als zweiarmige Hebel ausgebildete Kolben, von denen jeweils zwei benachbarte Kolben miteinander in Wälzeingriff stehen, um jeweils eine zu einer mittigen Gehäuseachse parallele Kolbenachse verschwenkbar angeordnet und gemeinsam in einer Umlaufrichtung beweglich sind, wobei die Kolbenachsen auf einer zur Innenwand des Gehäuses konzentrischen Kreisbahn um die Gehäuseachse umlaufen.

Eine derartige Schwenkkolbenmaschine ist aus der WO 93/01395 bekannt.

Schwenkkolbenmaschinen gehören zu einer Gattung von Brennkraftmaschinen, bei denen die einzelnen Arbeitstakte des Einlassens, Verdichtens, Zündens, Expandierens und Ausstoßens des Verbrennungsgemisches durch wippenartige Schwenkbewegungen der einzelnen Kolben zwischen zwei Endstellungen vermittelt werden. Die Schwenkbewegung der Kolben wird über entsprechende Zwischenglieder in eine Drehbewegung einer Abtriebswelle umgesetzt.

Bei einer ersten in dem eingangs genannten Dokument beschriebenen Ausführungsform sind die Kolben an sich ortsfest in dem Gehäuse angeordnet und führen nur hin- und hergehende Schwenkbewegungen zwischen zwei Endstellungen aus. Um die Schwenkbewegungen in Drehbewegungen einer mittig im Gehäuse angeordneten Abtriebswelle umzusetzen, ist die Abtriebswelle mit in bezug auf diese exzentrischen, einander diametral gegenüberliegenden Kurvenfolgegliedern starrachsig verbunden, auf denen sich der Abtriebswelle zugewandte Flächen der Kolben abwälzen. Diese der Abtriebswelle zugewandten Kolbenflächen sind dazu in definierter Weise parabelförmig ausgebildet, während die Kurvenfolgeglieder kreiszylindrisch gestaltet sind.

Bei dieser bekannten Bauart eines Schwenkkolbenmotors wird es als nachteilig angesehen, daß das Drehmoment in den Totlagen der Kolben, d.h. in den Stellungen der Kolben, in denen eine Umkehr ihrer Schwenkbewegung stattfindet, bei geringen Drehzahlen klein ist, was dadurch zu erklären ist, daß die Kolben in dem Gehäuse ortsfest angeordnet sind.

Bei einem zweiten in dem eingangs genannten Dokument beschriebenen Ausführungsbeispiel sind die Kolben nicht nur verschwenkbar in dem Gehäuse gelagert, sondern sie sind darüber hinaus in einer Umlaufrichtung um die mittige Gehäuseachse beweglich.

Beim Laufen dieser Schwenkkolbenmaschine führen die Kolben demnach Bewegungen aus, die sich aus einer Überlagerung der wippenartigen Schwenkbewegungen und der kreisförmigen Umlaufbewegung der Kolben ergeben. Gegenüber der zuvor beschriebenen Ausführungsform sind aufgrund der kombinierten Schwenk- und Umlaufbewegung die Kurvenfolgeglieder anstatt kreiszylindrisch im Querschnitt tropfenförmig ausgebildet, während die der weiterhin mittig angeordneten Abtriebswelle zugewandten Flächen der Kolben die Form eines Viertelkreises haben. Beim Umlaufen der Kolben wälzen sich die tropfenförmigen Kurvenfolgeglieder an diesen Flächen der Kolben ab. Dabei wird jedes der beiden vorhandenen Kurvenfolgenglieder in Rotation versetzt. Die tropfenförmigen Kurvenfolgeglieder sind anstatt starrachsig über ein in dem Gehäuse angeordnetes Zahnradgetriebe mit der Abtriebswelle verbunden, um ihre Eigenrotation auf die Abtriebswelle zu übertragen.

Dazu weist jedes der Kurvenfolgeglieder ein mit diesem fest verbundenes Ritzel auf, das mit einem Zwischenrad in Zahneingriff steht, das wiederum mit einem mittigen Zahnrad kämmt, das auf der Abtriebswelle befestigt ist.

Während bei dieser Ausführungsform die Drehmomentkurve gegenüber der vorbeschriebenen Ausführungsform günstiger verläuft, ist jedoch diese Bauart technisch wesentlich aufwendiger. Die Zahl der beweglichen Teile dieser Schwenkkolbenmaschine ist dadurch erhöht, daß nun auch die Kurvenfolgeglieder selbst drehbar gelagert sind und daß mehrere Ritzel vorgesehen sind, um die Drehbewegungen der Kurvenfolgeglieder auf die Abtriebswelle zu übertragen.

Die Kurvenfolgeglieder haben nicht nur die Funktion, die Schwenkbewegungen der einzelnen Kolben zu steuern, sondern auch die gesamte Antriebskraft der Kolben auf die Abtriebswelle zu übertragen. Dementsprechend müssen die Lager der Kurvenfolgeglieder sehr stabil ausgebildet sein.

Weiterhin ist das funktionsbedingte tropfenförmige Profil der Kurvenfolgeglieder dadurch nachteilig, daß dieses relativ spitz zuläuft, so daß beim Umlaufen der Kolben, wenn die Kolben über die Spitze der Kurvenfolgeglieder laufen, ein "harter" Übergang zwischen sanft gekrümmten und stark gekrümmten Abwälzbereichen beim Abwälzen besteht. Dies trägt zu einer Verminderung der Laufruhe dieser Schwenkkolbenmaschine bei.

Aus der DE-OS 15 51 101 ist ein Fliehkolbenverbrennungsmotor bekannt, der sechs voneinander beabstandete Kolben von etwa dreieckiger Form aufweist, die derart auf einem kreisförmigen Antriebsrad verschwenkbar gelagert sind, daß sie beim Umlaufen in dem Gehäuse des Motors durch die auftretenden Fliehkräfte gegen die Innenwand des Gehäuses gepreßt werden. Die Kolben werden dabei unabhängig voneinander entlang der Innenwand geführt. Um die Atmungsbewegungen der Kolben zu erzielen, ist die Innenwand des Gehäuses angenähert ovalförmig bzw. trochoidförmig ausgebildet. In dem Gehäuse sind mittig zwei feststehende Führungsnocken angeordnet, die auch bei geringen Drehzahlen des Motors, bei denen die Fliehkräfte gering sind, gewährleisten, daß die Kolben gegen die Innenwand des Gehäuses gepreßt werden, um die Funktionsfähigkeit des Motors bei geringen Drehzahlen aufrechtzuerhalten. Bei hohen Drehzahlen sind die Führungsnocken funktionslos.

Ferner ist aus der GB-PS 14 70 648 ein Drehkolbenmotor bekannt, bei dem insgesamt vier Kolben in dem Motorgehäuse angeordnet sind, von denen jeweils zwei diametral gegenüberliegende Kolben ein Kolbenpaar bilden. Die Gehäuseinnenwand ist etwa elliptisch ausgebildet, wobei die Kolben beim Umlaufen in dem Gehäuse ebenfalls wie bei dem zuvor genannten bekannten Fliehkraftkolbenverbrennungsmotor entlang der Innenwand geführt sind, um die Arbeitstakte des Motors zu erzielen. Benachbarte Kolben sind jeweils miteinander derart verbunden, daß die Verbindungsstellen jeweils eine Dichtung bilden, die stets an der Innenwand anliegt. Im Gehäuseinneren sind ferner mittig zwei entsprechend der Innenwand elliptisch geformte feststehende Kurvenfolgeglieder angeordnet, auf denen an den Kolben befestigte Rollen laufen, um die Kolben gegen die Innenwand des Gehäuses zu drücken. Dabei ist für jedes Kolbenpaar ein Kurvenfolgeglied vorgesehen, wobei die beiden Kurvenfolgeglieder unterschiedlich ausgestaltet sind.

Der Erfindung liegt somit die Aufgabe zugrunde, eine Schwenkkolbenmaschine der eingangs genannten Art dahingehend weiterzubilden, daß die Nachteile des Standes der Technik vermieden werden, daß insbesondere der technische Aufwand der Schwenkkolbenmaschine verringert und gleichzeitig die Laufruhe erhöht und das Drehmoment auch bei niedrigen Drehzahlen groß ist.

Hinsichtlich der eingangs genannten Schwenkkolbenmaschine wird die der Erfindung zugrunde liegende Aufgabe erfindungsgemäß dadurch gelöst, daß mittig in dem Gehäuse ein gehäusefestes Kurvenstück angeordnet ist, wobei auf den dem Kurvenstück zugewandten Seiten der Kolben Laufflächen ausgebildet sind, die beim Umlaufen der Kolben entlang einer Außenkontur des Kurvenstückes unter ständiger Berührung mit derselben derart geführt sind, daß die Schwenkbewegungen der Kolben während des Umlaufens, unabhängig von der Umlaufgeschwindigkeit, ausschließlich durch die Führung der Kolben entlang der Außenkontur des Kurvenstückes in Zusammenwirken mit dem Wälzeingriff gesteuert sind.

Die Erfindung löst sich somit von dem Konzept, die Kurvenfolgeglieder, von denen bei den aus dem Stand der Technik gemäß der WO 93/01395 bekannten Schwenkkolbenmaschinen zwei vorgesehen waren, exzentrisch zur Gehäuseachse anzuordnen und beweglich auszugestalten. Stattdessen ist erfindungsgemäß ein gehäusefestes, mittig angeordnetes Kurvenstück vorgesehen, wodurch der Aufwand der erfindungsgemäßen Schwenkkolbenmaschine wesentlich verringert wird, weil wesentlich weniger bewegliche Teile in dem Gehäuse vorgesehen sind. Dies wiederum trägt vorteilhaft dazu bei, daß die Laufruhe des erfindungsgemäßen Schwenkkolbenmotors erhöht ist.

Die Führung der Laufflächen der Kolben an der Außenkontur des Kurvenstückes unter ständiger Berührung mit derselben gewährleistet auf vorteilhafte Weise, daß die einzelnen Bewegungsabläufe der Kolben, die, wie bereits erwähnt, aus einer Überlagerung von Schwenk- und Umlaufbewegungen bestehen, exakt gesteuert werden können, wodurch in jeder Bewegungsstellung der Kolben unerwünschte, an den Kolben angreifende Zwangskräfte infolge von unkontrollierten Bewegungen der Kolben vermieden werden. Durch die exakte Führung der Kolben wird die Funktionssicherheit der Schwenkkolbenmaschine verbessert und die Lebensdauer erhöht.

Weiterhin hat es sich herausgestellt, daß es mit der erfindungsgemäßen mittigen und gehäusefesten Anordnung des Kurvenstückes möglich ist, daß die die Kolben führende Außenkontur des Kurvenstückes bei entsprechender Anordnung der Laufflächen am dem Kolben so ausgebildet werden kann, daß sie im Unterschied zu der tropfenförmigen Kontur der beweglichen Kurvenfolgeglieder nach dem Stand der Technik ausschließlich sanft ineinander übergehende Krümmungen aufweist, wodurch eine "weiche" und daher laufruhige Führung der Kolben gewährleistet ist, was wiederum den Verschleiß vermindert. Weiterhin hat es sich gezeigt, daß durch die mittige und gehäusefeste Anordnung des Kurvenstückes die Drehmomentcharakteristik der erfindungsgemäßen Schwenkkolbenmaschine auch bei niedrigen Drehzahlen gegenüber der Drehmomentcharakteristik der aus dem Stand der Technik bekannten Schwenkkolbenmaschinen mit beweglichen Kurvenfolgegliedern erhöht ist.

Somit wird die Aufgabe vollkommen gelöst.

In einer bevorzugten Ausgestaltung entspricht die Außenkontur des Kurvenstückes genau der von einem der Gehäuseachse am nächsten liegenden Punkt der Lauffläche beschriebenen Bahnkurve, der sich aus der Überlagerung aus der Schwenk- und Umlaufbewegung der Kolben bei einem vollen Umlauf ergibt.

Diese Maßnahme hat den Vorteil, daß die Kolben entlang der Außenkontur des Kurvenstückes derart geführt werden, daß die Kolben während eines vollen Umlaufes unter ständiger Berührung der Laufflächen mit der Außenkontur des Kurvenstückes um das Kurvenstück umlaufen und dabei die den Arbeitszyklen entsprechenden Schwenkbewegungen ausführen, ohne daß dabei auf die Kolben Zwangskräfte wirken, die zu einer Beeinträchtigung der Betriebssicherheit fahren könnten. Mit anderen Worten ist die Außenkontur an die sich aus den Schwenk- und Umlaufbewegungen ergebende "natürliche" Bahnkurve angepaßt. Ebenso wird die Laufruhe der erfindungsgemäßen Schwenkkolbenmaschine weiter erhöht.

In einer weiteren bevorzugten Ausgestaltung erstreckt sich das Kurvenstück axial über etwa die gesamte Länge des Gehäuses, wobei sich jedoch die Laufflächen der Kolben und die Außenkontur des Kurvenstückes nur in axial begrenzten Bereichen berühren.

Diese Maßnahme hat den Vorteil, daß die exakte Führung der Kolben entlang des mittigen Kurvenstückes gewährleistet ist und gleichzeitig Reibungsverluste an den sich berührenden Laufflächen der Kolben und dem Kurvenstück vermindert werden. Geringere Reibungsverluste haben den Vorteil, daß der Wirkungsgrad der erfindungsgemäßen Schwenkkolbenmaschine erhöht ist, und daß der Verschleiß der Laufflächen und der Außenkontur des Kurvenstückes reduziert wird.

Weiterhin ist es bevorzugt, wenn die Kolben als zweiarmige Hebel ausgebildet sind und die Laufflächen an einem Ende eines der beiden Hebelarme der Kolben angeordnet sind.

Da an den Enden der als zweiarmige Hebel ausgebildeten Kolben der Schwenkhub am größten ist, hat diese Maßnahme den Vorteil, daß beim Umlaufen der Kolben um das Kurvenstück die Schwenkbewegung der Kolben um ihre jeweilige Kolbenachse von den am Ende der Hebelarme angeordneten Laufflächen mit dem größtmöglichen Drehmoment unterstützt wird. Diese Anordnung der Laufflächen an den Kolben ermöglicht somit eine wohldefinierte Führung und Steuerung der Kolben.

In einer weiteren bevorzugten Ausgestaltung sind die Laufflächen der Kolben Oberflächen von drehbar an den Kolben befestigten Walzen.

Diese Maßnahme hat den Vorteil, daß sich die Walzen an der Außenkontur des Kurvenstückes abwälzen, wodurch Reibungsverluste zwischen den Laufflächen der Kolben und der Außenkontur des Kurvenstückes weiter reduziert sind. Dadurch ist eine geringere Schmierung der Berührflächen zwischen den Laufflächen der Kolben und der Außenkontur des Kurvenstückes erforderlich und der Verschleiß der aneinander laufenden Flachen vermindert.

Dabei ist es bevorzugt, wenn die Walzen einen Halbdurchmesser aufweisen, der geringer als der Krümmungsradius von konkaven Abschnitten des Kurvenstückes ist.

Diese Maßnahme hat den Vorteil, daß in jeder Stellung der Kolben eine im wesentlichen linienförmige Berührung zwischen den Laufflächen der Kolben und der Außenkontur des Kurvenstückes erreicht wird. Eine linienförmige Berührung hat den Vorteil, daß die Laufflächen der Kolben sanft und ohne Sprungstellen definiert an der Außenkontur des Kurvenstückes während des Umlaufens der Kolben entlanglaufen.

In einer alternativen bevorzugten Ausgestaltung sind die Laufflächen Oberflächen von kolbenfesten Gleitstücken.

Diese Maßnahme hat den Vorteil, daß die Anzahl von beweglichen Teilen in dem erfindungsgemäßen Schwenkkolbenmotor weiter verringert ist. Auch mit kolbenfesten Gleitstücken kann eine ebenso exakte Führung der Kolben beim Umlaufen um das Kurvenstück erzielt werden. Der technische Aufwand ist somit bei dieser Ausgestaltung der Laufflächen der Kolben auf vorteilhafte Weise vermindert.

Dabei ist es weiterhin bevorzugt, wenn die Laufflächen zumindest in den Bereichen, die mit der Außenkontur des Kurvenstückes in Berührung stehen, teilkreisförmig ausgebildet sind.

Diese Maßnahme hat nun den Vorteil, daß auch bei kolbenfesten Gleitstücken eine den sich beim Umlaufen der Kolben überlagernden Schwenk- und Umlaufbewegungen gerechte weiche Führung der Kolben erzielt wird, indem die Berührungsstellen zwischen den Laufflächen der Kolben und der Außenkontur des Kurvenstücks im wesentlichen linienförmig sind.

In einer bevorzugten Ausgestaltung sind die Kolben jeweils an einem sich axial erstreckenden Achsstab gelagert, wobei die Achsstäbe gemeinsam endseitig mit jeweils einem in Umlaufrichtung beweglichen Ringkörper verbunden sind.

Durch diese Maßnahme wird auf vorteilhafte und konstruktiv einfache Weise eine gemeinsame Umlaufbewegung der Kolben durch die beiden axial seitlich angeordneten Ringkörper erreicht. Dies eröffnet weiterhin die Möglichkeit, die Drehbewegung der Ringkörper auf eine entsprechende Abtriebswelle zu übertragen.

Dabei ist es bevorzugt, wenn zumindest einer der Ringkörper eine Außenverzahnung aufweist, die mit einer entsprechenden Außenverzahnung einer parallel zur Gehäuseachse verlaufenden und exzentrisch zu dieser angeordneten Abtriebswelle kommt.

Dadurch wird der Vorteil erzielt, daß die Drehbewegung des oder der Ringkörper unmittelbar auf die Abtriebswelle ohne Zwischenschaltung von Verbindungsgliedern übertragen werden kann, so daß Kraftverluste vermieden werden, die wie beim Stand der Technik, durch ein aus mehreren Ritzeln bestehendes Getriebe hervorgerufen werden.

In einer weiteren bevorzugten Ausgestaltung sind die Kolben an ihren axialen Enden axial nach außen durch eine Dichtung abgedichtet, die mehrere axial nach innen vorstehende Dichtwülste aufweist, die an den Kolben dichtend anliegen.

Durch diese Maßnahme wird eine besonders funktionssichere Abdichtung der Kolben erzielt, da die axial nach innen vorstehenden Dichtwülste eine Mehrfachdichtwirkung besitzen, und sich die einzelnen Dichtwülste einzeln dicht an die Kolben legen.

In einem weiteren bevorzugten Ausführungsbeispiel ist das Kurvenstück um die Gehäuseachse zur Veränderung des Zündzeitpunktes verdrehbar und in einer verdrehten Position feststellbar.

Bei diesem Ausführungsbeispiel besteht der besondere Vorteil darin, daß durch die Verdrehbarkeit des Kurvenstückes der Zündzeitpunkt der erfindungsgemäßen Schwenkkolbenmaschine variiert werden kann. Die Veränderung des Zündzeitpunktes wird dadurch bewirkt, daß das Kurvenstück aus seiner Grundstellung im oder gegen den Uhrzeigersinn verdreht wird, wodurch sich der obere Totpunkt (OT) im Uhrzeigersinn bzw. Gegenuhrzeigersinn relativ zu der bzw. den feststehenden Zündkerzen verlagert, so daß eine Zündung des Brennstoff-Luftgemisches vor bzw. nach dem Erreichen des Totpunktes entsprechend einer Spät- bzw. Frühzündung erfolgt. Eine Veränderung des Zündzeitpunktes wird bei modernen Hochleistungsmotoren zur Steigerung der Leistungsfähigkeit des Motors ausgenutzt. Bei herkömmlichen Hubkolbenmotoren wird die Veränderung des Zündzeitpunktes bspw. dadurch bewirkt, daß die Zündkerzen über eine elektronische Steuerung geringfügig früher bzw. später angesteuert werden, mit anderen Worten wird die Veränderung des Zündzeitpunktes durch eine zeitliche Veränderung der Emission des Zündfunkens geregelt. Bei dem erfindungsgemäßen Schwenkkolbenmotor wird dies dagegen durch eine mechanische Veränderung der Lage des oberen Totpunktes bewirkt, während die Emission des Zündfunkens zeitlich unverändert bleiben kann.

Dabei ist es bevorzugt, wenn das Kurvenstück stufenlos über einen Winkelbereich von etwa ± 15° verdrehbar ist.

Durch diese Maßnahme wird der Vorteil erzielt, daß das Kurvenstück beliebig im Uhrzeiger- bzw. Gegenuhrzeigersinn verstellt werden kann, so daß der Zündzeitpunkt der erfindungsgemäßen Schwenkkolbenmaschine variiert werden kann.

In einer weiteren bevorzugten Ausgestaltung ist das Kurvenstück in Abhängigkeit von der Drehzahl der Schwenkkolbenmaschine verdrehbar.

Da der optimale Zündzeitpunkt bekanntermaßen von der Drehzahl eines Motors abhängt, wird somit vorteilhafterweise über den gesamten Drehzahlbereich der erfindungsgemäßen Schwenkkolbenmaschine die beste Leistung erzielt.

In einer bevorzugten Ausgestaltung ist ein Verstellmechanismus vorgesehen, der ein Schneckengetriebe aufweist.

Ein Schneckengetriebe stellt einen mechanisch einfachen Antrieb für das Kurvenstück dar, wobei zusätzlich der Vorteil erzielt wird, daß mit dem Schneckengetriebe ein sehr feines stufenloses Verdrehen des Kurvenstückes ermöglicht wird.

In einer weiteren bevorzugten Ausgestaltung ist der Verstellmechanismus elektronisch in Abhängigkeit von der Drehzahl der Schwenkkolbenmaschine gesteuert.

Mit dieser Art einer Steuerung des Verstellmechanismus kann die Drehzahl der Schwenkkolbenmaschine bspw. mechanisch erfaßt werden, wobei ein Signal erzeugt wird, das für die Steuerung des Verstellmechanismus verwendet wird.

Bei einem alternativen bevorzugten Ausführungsbeispiel weist die Schwenkkolbenmaschine mehrere umfänglich beabstandet angeordnete Zündkerzen auf, die jeweils in Abhängigkeit von der Drehzahl der Schwenkkolbenmaschine unterschiedlich zur Erzeugung eines Zündfunkens angesteuert werden.

Bei diesem Ausführungsbeispiel wird im Unterschied zu dem zuvor geschilderten Ausführungsbeispiel der Zündzeitpunkt dadurch verstellt, daß die mehreren umfänglich beabstandet angeordneten Zündkerzen unterschiedlich angesteuert werden, während das Kurvenstück seine Lage beibehält. Diese Ausgestaltung ist somit technisch einfacher ausgestaltet, wobei allerdings keine stufenlose Verstellbarkeit des Zündzeitpunktes möglich ist. Es besteht lediglich die Möglichkeit, eine Früh-, Normal- oder Spätzündung zu bewirken, ohne daß die Früh- bzw. Spätzündung graduell abgestuft werden kann.

Bei einer weiteren bevorzugten Ausgestaltung weist die Schwenkkolbenmaschine eine Kraftstoff-Einspritzdüse auf, die in Umlaufrichtung der Kolben in einem Umfangswinkel von etwa 25° vor dem Zündzeitpunkt angeordnet ist.

Diese Maßnahme bewirkt, daß die Einspritzung des Kraftstoffes unabhängig von der Ansaugung der Verbrennungsluft kurz vor dem Zündpunkt und somit kurz vor dem oberen Totpunkt, der bei unverdrehbarem Kurvenstück mit dem Zündzeitpunkt zusammenfällt und bei wie vorstehend beschrieben verdrehbarem Kurvenstück gegenüber dem Zündpunkt geringfügig verschoben ist, erfolgt. Somit wird der Vorteil erzielt, daß auch bei der erfindungsgemäßen Schwenkkolbenmaschine eine Kraftstoff-Direkteinspritzung nach dem GDI-Prinzip (GDI: Gasoline Direct Injection) ausgenutzt werden kann, um den Wirkungsgrad der erfindungsgemäßen Schwenkkolbenmaschine zu erhöhen und den Kraftstoffverbrauch zu senken. Insbesondere im Zusammenhang mit der zuvor beschriebenen verdrehbaren Ausgestaltung des Kurvenstückes zur Veränderung des Zündzeitpunktes kann die Leistungsfähigkeit der erfindungsgemäßen Schwenkkolbenmaschine weiter erhöht werden.

Alternativ zu der vorher beschriebenen Ausgestaltung der erfindungsgemäßen Schwenkkolbenmaschine mit einer exzentrisch angeordneten Abtriebswelle ist es weiterhin bevorzugt, wenn die Schwenkkolbenmaschine eine konzentrisch zur Gehäuseachse angeordnete Abtriebswelle aufweist.

Eine konzentrische Anordnung der Abtriebswelle hat gegenüber einer exzentrischen Anordnung den Vorteil, daß die Schwenkkolbenmaschine radial schmaler ausgebildet werden kann.

Dabei ist es bevorzugt, wenn der erste Ringkörper auf einer Außenseite zentrisch die Abtriebswelle aufweist und auf der gegenüberliegenden Seite über die Achsstäbe mit dem zweiten Ringkörper fest verbunden ist.

Dadurch, daß die Ringkörper bei dieser Ausgestaltung keine Außenverzahnung aufweisen, die mit einer entsprechenden Verzahnung der Abtriebswelle kämmen, sondern die Abtriebswelle zentrisch an einem der Ringkörper ausgebildet ist, werden mehrere unterschiedliche funktionelle Elemente zu Baueinheiten zusammengefaßt. Dies hat den Vorteil, daß die erfindungsgemäße Schwenkkolbenmaschine aus weniger Teilen besteht und dadurch konstruktiv einfacher ausgestaltet ist.

Weiterhin ist es dabei bevorzugt, wenn das Kurvenstück in den ersten Ringkörper, der die Abtriebswelle aufweist, eingreift und von diesem gehäusefest gehalten wird.

Diese Maßnahme hat den Vorteil, daß das Kurvenstück bezüglich des Gehäuses feststehend ist, ohne jedoch mit dem Gehäuse direkt verbunden zu sein. Dadurch, daß der erste Ringkörper sowohl die Abtriebswelle aufweist und gleichzeitig das Kurvenstück hält, werden weitere Teile eingespart.

Bei einer weiteren bevorzugten Ausgestaltung bilden die Ringkörper und die Achsstäbe eine zylindrische Einheit mit einem axial durchgehend konstanten Außendurchmesser.

Diese konstruktive Maßnahme hat den Vorteil, daß die aus den Ringkörpern, den Achsstäben und dem Kurvenstück gebildete Einheit als Ganzes aus dem Gehäuse herausgezogen und auch als Ganzes eingeschoben werden kann, weil es diese Ausgestaltung ermöglicht, auch die Gehäuseinnenwand hinsichtlich ihres Innendurchmessers axial durchgehend homogen auszubilden. Dies hat den Vorteil, daß die erfindungsgemäße Schwenkkolbenmaschine montageund wartungsfreundlich ist, weil die Ringkörper, die Achsstäbe und das Kurvenstück außerhalb des Gehäuses zu einer Einheit vormontiert werden können.

Weitere Vorteile ergeben sich aus der nachfolgenden Beschreibung der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der erfindungsgemäßen Schwenkkolbenmaschine ist in der Zeichnung dargestellt. Es zeigen:
- Fig. 1: einen Querschnitt einer Schwenkkolbenmaschine entlang der Linie I-I von Fig. 2;
- Fig. 2: einen Längsschnitt der Schwenkkolbenmaschine entlang der Linie II-II von Fig. 1;
- Fig. 3: einen Längsschnitt der Schwenkkolbenmaschine entlang der Linie III-III von Fig. 1;
- Fig. 4: einen Querschnitt der Schwenkkolbenmaschine entlang der Linie IV-IV von Fig. 2;
- Fig. 5a) - e): der Fig. 1 entsprechende Querschnitte der Schwenkkolbenmaschine in fünf Arbeitsstellungen, die in Abständen von 22,5° aufeinanderfolgen;
- Fig. 6: einen der Fig. 1 entsprechenden Querschnitt eines weiteren Ausführungsbeispieles einer Schwenkkolbenmaschine;
- Fig. 7: einen Fig. 2 entsprechenden Längsschnitt der Schwenkkolbenmaschine in Fig. 6;
- Fig. 8: einen der Fig. 3 entsprechenden Längsschnitt der Schwenkkolbenmaschine in Fig. 6;
- Fig. 9: einen Querschnitt der Schwenkkolbenmaschine entlang der Linie IX-IX in Fig. 8;
- Fig. 10: einen der Fig. 6 entsprechenden Querschnitt eines weiteren Ausführungsbeispiels einer Schwenkkolbenmaschine;
- Fig. 11: einen der Fig. 7 entsprechenden Längsschnitt eines weiteren Ausführungsbeispiels einer Schwenkkolbenmaschine; und
- Fig. 12: einen der Fig. 8 entsprechenden Längsschnitt der Schwenkkolbenmaschine in Fig. 11.

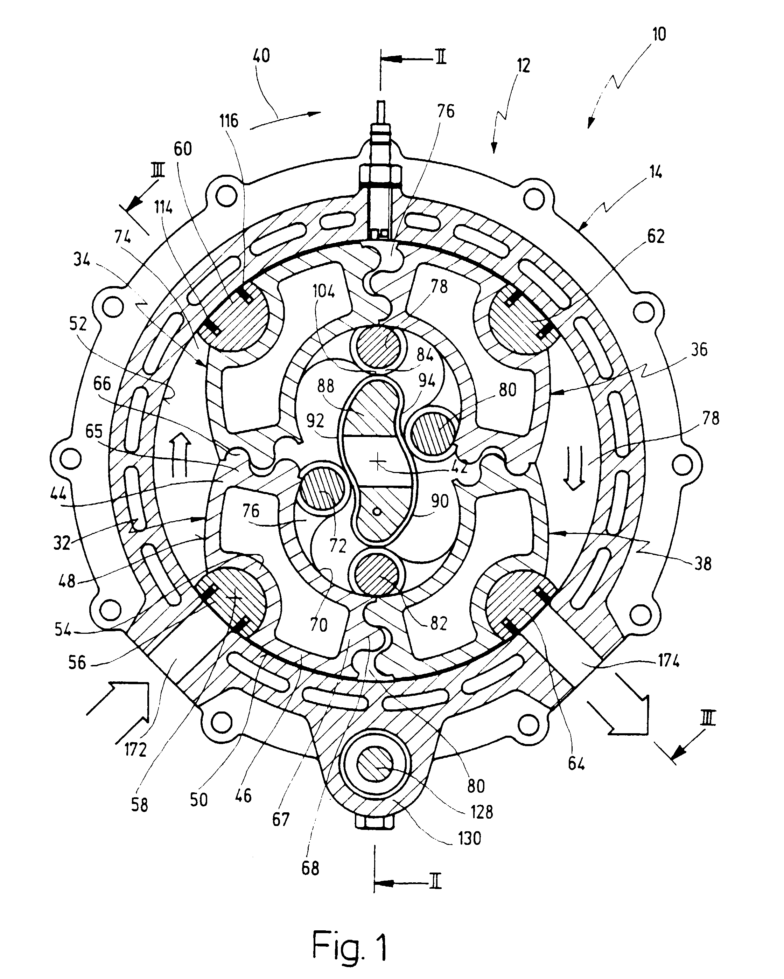

In Fig. 1 bis 4 ist eine Schwenkkolbenmaschine 10 in verschiedenen Schnitten dargestellt.

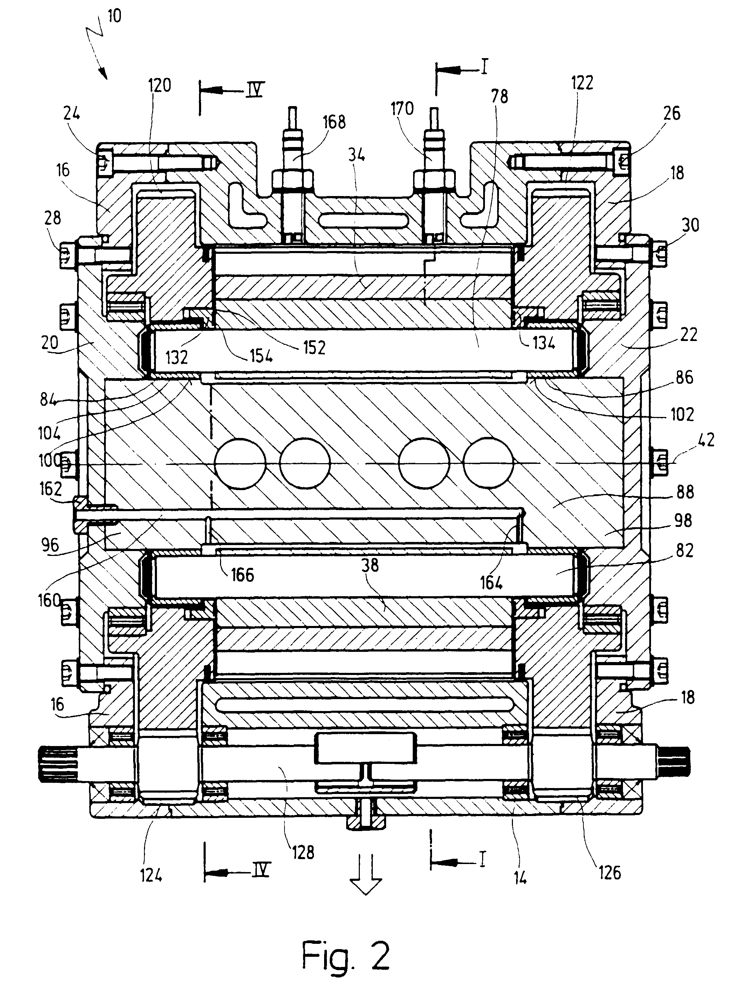

Die Schwenkkolbenmaschine 10 weist ein Gehäuse 12 auf, das aus einem sich axial erstreckenden und im wesentlichen zylindrischen mittigen Gehäuseteil 14, einem axial daran anschließenden linken Gehäuseringflansch 16 und einem rechten Gehäuseringflansch 18 sowie einem linken Gehäusedeckel 20 und einem rechten Gehäusedeckel 22 gebildet wird (vgl. Fig. 2). Der linke Gehäuseringflansch 16 ist an dem mittigen Gehäuseteil 14 mittels umfänglich verteilter Schrauben 24 und der rechte Gehäuseringflansch 18 an dem mittigen Gehäuseteil 14 mittels umfänglich verteilter Schrauben 26 befestigt. Der linke Gehäusedeckel 20 ist seinerseits mit dem linken Gehäuseringflansch 16 über ebenfalls umfänglich verteilte Schrauben 28, und der rechte Gehäusedeckel 22 ist mit dem rechten Gehäuseringflansch 18 mittels ebenfalls umfänglich verteilter Schrauben 30 fest verbunden.

In dem Gehäuse 12 sind vier identische Kolben 32, 34, 36 und 38 angeordnet (vgl. Fig. 1). Die Kolben 32, 34, 36 und 38 sind in einer Umlaufrichtung 40 um eine mittige Gehäuseachse 42 herum beweglich, wie an späterer Stelle noch naher erläutert wird.

Da die Kolben 32, 34, 36 und 38 identisch sind, soll die Ausgestaltung dieser aus Gründen der Übersichtlichkeit im folgenden exemplarisch anhand des Kolbens 32 beschrieben werden.

Der Kolben 32 ist als zweiarmiger Hebel ausgebildet und weist demnach einen ersten Hebelarm 44 und einen zweiten Hebelarm 46 auf. Der erste Hebelarm 44 und der zweite Hebelarm 46 weisen radial äußere Flächen 48 bzw. 50 auf, die eine Krümmung aufweisen, die genau der Krümmung einer Innenwandung 52 des mittigen Gehäuseteiles 14 entsprechen, so daß sich die radial äußeren Flächen 48 und 50 flächig an die Innenwandung 52 anlegen können.

Der erste Hebelarm 44 und der zweite Hebelarm 46 sind über einen radial nach innen gekrümmten konkaven Abschnitt 54 starr und einstückig miteinander verbunden. An dem konkaven Abschnitt 54 ist der Kolben 32 an einem Achsstab 56 um eine Kolbenachse 58 verschwenkbar gelagert, so daß der Kolben 32 zwischen zwei Endstellungen hin- und herschwenken kann, wobei in der einen Endstellung wippenartig die radial äußere Fläche 50 und in der anderen Endstellung wie dargestellt die radial äußere Fläche 48 an der Innenwandung 52 anliegt.

Neben dem Achsstab 56 sind für die Kolben 34, 36 und 38 entsprechend identische Achsstäbe 60, 62 und 64 vorgesehen, an denen die Kolben 34, 36 und 38 genauso verschwenkbar gelagert sind, ohne daß dies hier nochmals erläutert werden muß.

Die vier Achsstäbe 56, 60, 62 und 64 sind gegeneinander um einen Winkel von 90° versetzt angeordnet.

Der erste Hebelarm 44 des Kolbens 32 weist weiterhin an seinem seitlichen Ende 65 eine Verzahnung 66 auf, die aus zwei nach außen vorstehenden, im Schnitt etwa halbkreisförmigen Zähnen und einer nach innen gerichteten, ebenfalls im Schnitt etwa halbkreisförmig ausgebildeten Ausnehmung gebildet wird. Der zweite Hebelarm 46 weist an seinem seitlichen Ende 67 eine Verzahnung 68 auf, die zu der Verzahnung 66 komplementär ausgebildet ist.

Über die Verzahnungen 66 und 68 steht der Kolben 32 mit seinen benachbarten Kolben 34 und 38 in dichtem Wälzeingriff, die entsprechende komplementäre Verzahnungen aufweisen. Die Verzahnungen wälzen sich beim Verschwenken der Kolben 32, 34, 36 und 38 ineinander ab und haben gleichzeitig eine Dichtfunktion. Ebenfalls ist ersichtlich, daß immer zwei benachbarte der Kolben 32, 34, 36 und 38 gegenläufige Schwenkbewegungen ausführen.

Jeweils zwei einander benachbarte der Kolben 32, 34, 36 und 38 begrenzen vier dichte Arbeitsräume 74, 76, 78 bzw. 80, deren Volumen sich beim Betrieb der Schwenkkolbenmaschine 10 infolge der Schwenk- und Umlaufbewegung der Kolben 32, 34, 36 und 38 abwechselnd vergrößert und verkleinert. Beispielsweise wird der Arbeitsraum 74 von den Kolben 32 und 34, den Achsstäben 56 und 60 und einem entsprechenden Abschnitt der Innenwandung 52 des mittigen Gehäuseteiles 14 begrenzt, wobei die Kolben 32, 34, 36 und 38 auch axial abgedichtet sind, wie noch später beschrieben wird.

An dem Ende 65 des Hebelarmes 44 ist auf einer radial inneren Seite 70 des Kolbens 32 ein sich axial erstreckender, zylindrischer Kolbenstab 72 über einen Anguß 76 fest mit dem Kolben 32 verbunden.

Entsprechend weisen die Kolben 34, 36 und 38 entsprechend befestigte Kolbenstäbe 78, 80 und 82 auf.

Der Kolbenstab 78 trägt an seinen beiden axialen Enden jeweils eine zylindrische Walze 84 und 86 (vgl. Fig. 2), die jeweils drehbar auf dem Kolbenstab 78 gelagert sind. Die zylindrischen Walzen 84 und 86 erstrecken sich dabei axial nur über eine Teillänge des Kolbenstabs 78. In gleicher Weise sind an den Kolbenstäben 74, 80 und 82 identische Walzen vorgesehen.

In dem Gehäuse 12 ist mittig weiterhin ein sich axial erstreckendes Kurvenstück 88 angeordnet, das jeweils mit dem linken Gehäusedeckel 20 und dem rechten Gehäusedeckel 22 gehäusefest verbunden ist (vgl. Fig. 1 und 2). Das Kurvenstück 88 weist eine Außenkontur 90 auf, die in Umfangsrichtung einander abwechselnde konvexe Abschnitte 92 und konkave Abschnitte 94 aufweist.

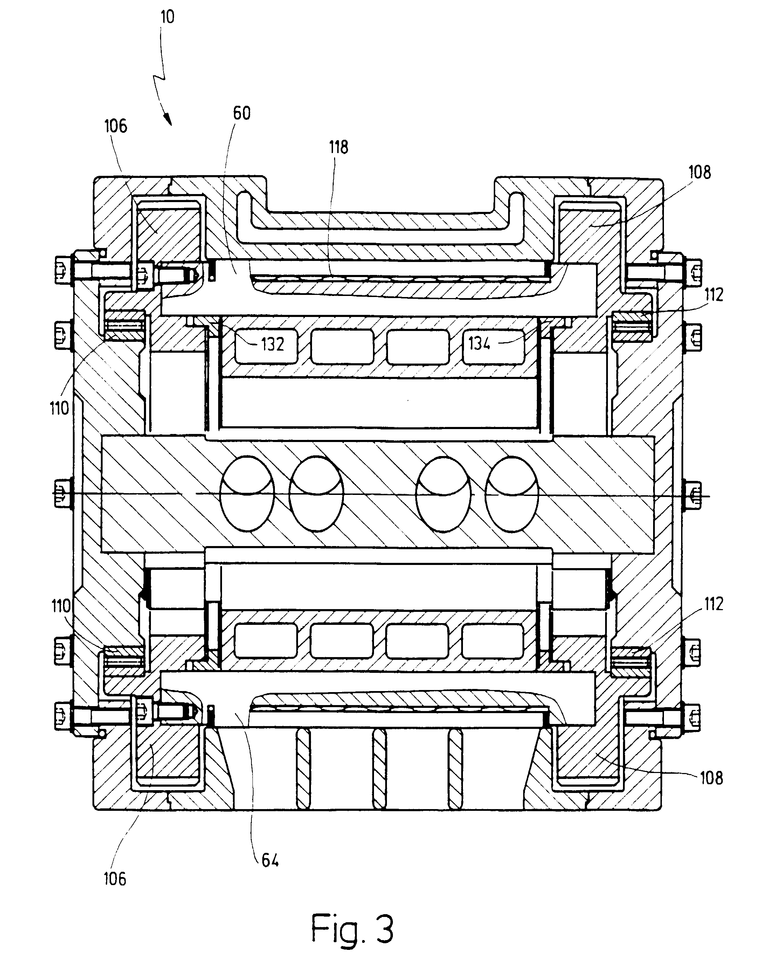

Aus Fig. 2 und 3 ist ersichtlich, daß das Kurvenstück 88 axiale Endbereiche 96 und 98 aufweist, die sich über eine axiale Teillänge des Kurvenstückes 88 erstrecken und radial dicker sind als der mittige Bereich des Kurvenstückes 88. Die axialen Endbereiche 96 und 98 bilden denjenigen umfänglichen Teil der Außenkontur 90 des Kurvenstückes 88, auf der sich die zylindrischen Walzen 84 und 86 beim Umlaufen des Kolbens 34 und die entsprechenden Walzen der Kolben 32, 36 und 38 um die Gehäuseachse 42 abwälzen. Oberflächen der Walzen 84 und 86 bilden demnach Laufflächen 100 bzw. 102 des Kolbens 34, die auf der Außenkontur 90 des Kurvenstückes 88 entlanglaufen, wobei die Laufflächen 100 bzw. 102 während des Umlaufens des Kolbens 34 unter ständiger Berührung mit der Außenkontur 90 in den axialen Endbereichen 96 und 98 des Kurvenstückes 88 stehen, so daß der Kolben 34 während des Umlaufens um das Kurvenstück 88 ununterbrochen geführt wird. Gleiches gilt wieder für die übrigen Kolben 32, 36 und 38.

Ein Halbdurchmesser der zylindrischen Walzen 84 und 86 ist kleiner als der Krümmungsbereich der konkaven Bereiche 94 des axialen Kurvenstückes 88.

Die Außenkontur des Kurvenstückes 88 entspricht genau der von einem der Gehäuseachse 42 am nächsten liegenden, mit 104 angedeuteten, Punkt der Lauffläche 100 beschriebenen Bahnkurve, wobei sich die Bahnkurve des Punktes 104 aus der Überlagerung der Schwenkbewegung und Umlaufbewegung der Kolben 32, 34, 36 bzw. 38 bei einem vollen Umlauf um die Gehäuseachse 42 ergibt.

Aus Fig. 3 geht hervor, daß die Achsstäbe 60 und 64 (ebenso wie die in Fig. 3 nicht sichtbaren Achsstäbe 56 und 62) jeweils axial endseitig mit einem Ringkörper 106 und einem Ringkörper 108 fest verbunden sind, wobei die Ringkörper 106 und 108 in dem Gehäuse 12 in der Umlaufrichtung 40 drehbar auf Lagerringen 110 bzw. 112 gelagert sind. Die Achsstäbe 56, 60, 62 und 64 und die Ringkörper 106 und 108 bilden einen in dem Gehäuse 12 drehbaren Käfig, wobei die Achsstäbe 56, 60, 62 und 64 beim Umlaufen dieses Käfigs die Kolben 32, 34, 36 und 38 mit führen.

Beim Umlaufen liegen die Achsstäbe 56, 60, 62 und 64 dicht an der Innenwandung 52 des mittigen Gehäuseteiles 14 an. Dazu besitzen die Achsstäbe 56, 60, 62 und 64 ein kleines radiales Spiel, so daß in den Achsstäben 56, 60, 62 und 64 eingebettete Dichtungen 114 und 116 durch die auftretenden Zentrifugalkräfte radial nach außen gegen die Innenwandung 52 des mittigen Gehäuseteiles 14 gedrückt werden. Damit auch im Ruhezustand der Schwenkkolbenmaschine 10 oder bei niedrigen Drehzahlen eine ausreichende Dichtung zu der Innenwandung 52 hin gewährleistet ist, sind in den Achsstäben 56, 60, 62 und 64 Flachwellenfedern 118 vorgesehen, die die Dichtungen 114, 116 bereits im Ruhezustand radial nach außen drücken.

Die Ringkörper 106 und 108 weisen eine umfänglich auf diesen angeordnete Außenverzahnung 120 bzw. 122 auf, die mit entsprechenden Außenverzahnungen 124 und 126 einer parallel zur Gehäuseachse 42 verlaufenden und exzentrisch zu dieser angeordneten Abtriebswelle 126 kämmen, die in einer Auswölbung 130 des Gehäuses 12 gelagert ist. Die Drehbewegung der Ringkörper 106 bzw. 108 wird somit in eine Drehbewegung der Abtriebswelle 128 übertragen. Die Abtriebswelle 128 kann bspw. mit einem hier nicht dargestellten Getriebe eines Kraftfahrzeuges verbunden sein.

Die Kolben 32, 34, 36 und 38 sind in axialer Richtung durch jeweils eine Dichtung 132 und 134 nach außen abgedichtet.

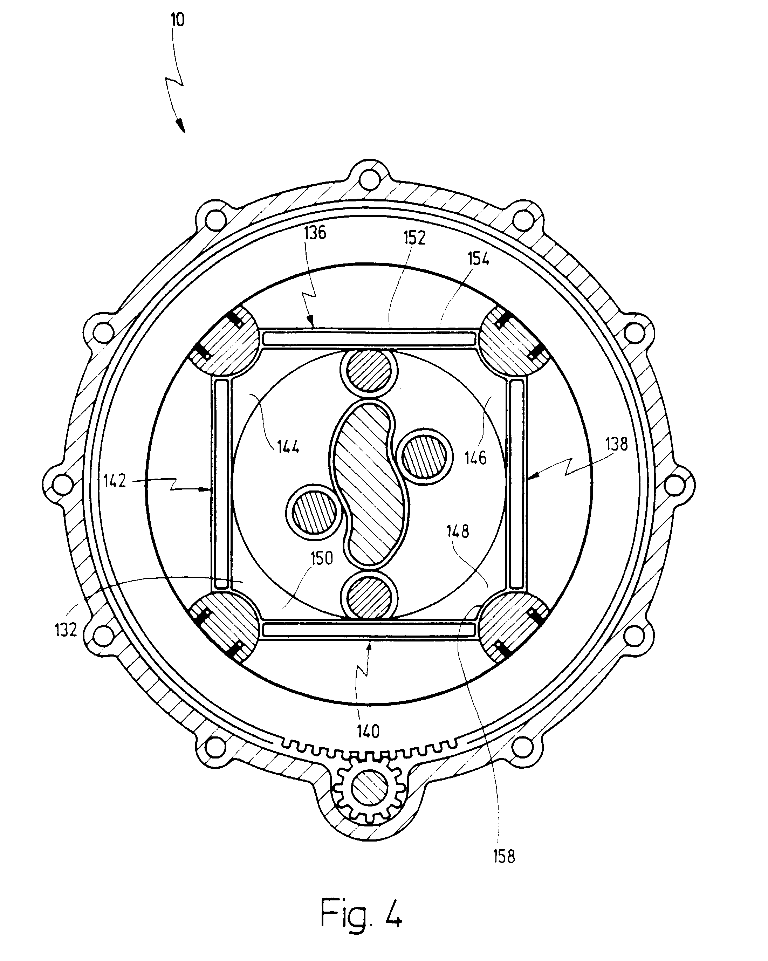

In Fig. 4 ist die Dichtung 132 in einer Draufsicht zu sehen. Die Dichtung 132 weist vier rechtwinklig zueinander angeordnete geradlinig verlaufende radial äußere Abschnitte 136, 138, 140 und 142 auf, die über Verbindungsabschnitte 144, 146, 148 und 150 miteinander einstückig verbunden sind.

Jeder der äußeren Abschnitte 136, 138, 140, 142 weist zwei axial nach innen vorstehende Dichtwülste 152 und 154 auf, wie hier exemplarisch für den Abschnitt 136 angegeben ist, die an den seitlichen axialen Enden der Kolben 32, 34, 36 und 38 dichtend anliegen. Zwischen den Dichtwülsten 152 und 154 ist der äußere Abschnitt 136 ebenso wie die anderen Abschnitte 138, 140 und 142 axial nach außen vertieft. Der Verbindungsabschnitt 148 weist einen entsprechend dem Achsstab 62 gekrümmten Dichtwulst 158 auf, wobei identische Dichtwülste an den Verbindungsabschnitten 144, 146 und 150 vorgesehen sind. Die Dichtung 132 weist ferner einen sich axial nach außen erstreckenden Abschnitt 156 auf, der in entsprechende Ausnehmungen in dem Ringkörper 106 eingebettet ist (vgl. Fig. 2).

Die Dichtung 132, und dies gilt für die spiegelbildlich dazu angeordnete Dichtung 134 entsprechend, liegt mit den Dichtwülsten 152 und 154 und den entsprechenden Dichtwülsten der übrigen Abschnitte 138, 140 und 142 sowie mit dem Dichtwulst 158 und den Dichtwülsten der übrigen Verbindungsabschnitte 144, 146, 148 und 150 dichtend an den Kolben 32, 34, 36 und 38 an.

Aus Fig. 2 geht noch hervor, daß in dem Kurvenstück 88 ein Kanal 160 vorgesehen ist, der zur Aufnahme und Weiterleitung von flüssigen Schmierstoffen, wie Motorenöl, vorgesehen ist, die durch eine Einlaßschraube 162 eingefüllt werden können und über weitere Kanäle 164 und 166 in den mittigen Innenraum des Gehäuses 12 gelangen, um die Laufflächen 100 und 102 des Kolbens 34 sowie die übrigen Laufflächen der übrigen Kolben 32, 36 und 38 und die mit diesen in Berührung stehende Außenkontur 90 des Kurvenstückes 88 zu schmieren.

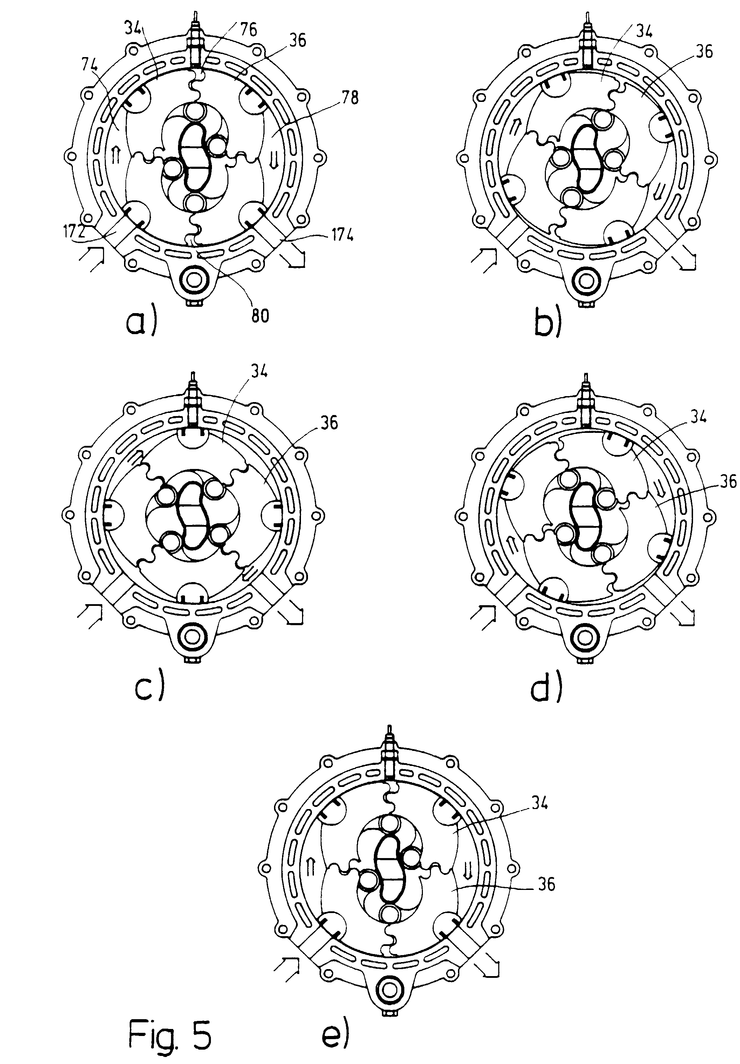

Ferner weist die Schwenkkolbenmaschine 10 zwei Zündkerzen 168 und 170 auf, die in dem mittigen Gehäuseteil 14 eingelassen sind. Darüber hinaus ist in dem Gehäuse 12 ein sich radial erstreckender Einlaßkanal 172 zum Einlassen eines Brennstoff-Luftgemisches vorgesehen, der mit der Lage der Zündkerzen 168 und 170 einen Winkel von etwa 135° einschließt. Ebenso ist ein Auslaßkanal 174 in dem Gehäuse 12 vorgesehen, durch das verbranntes Gemisch ausgestoßen werden kann. Der Auslaßkanal 174 schließt mit den Zündkerzen 168 und 170 ebenfalls einen Winkel von etwa 135° ein. In Fig. 5a) - e) ist die Arbeitsweise der in Fig. 1 bis 4 dargestellten Schwenkkolbenmaschine 10 als Viertakt-Ottomotor dargestellt. Fig. 5a) stimmt mit Fig. 1 überein und zeigt die Stellung der Kolben 32, 34, 36 und 38 im Zündzeitpunkt, der auch als oberer Totpunkt bezeichnet wird. Alle vier Kolben 32, 33, 36 und 38 befinden sich in einer ihrer Schwenkstellungen. Der Einlaßkanal 172 ist durch den Achsstab 56 dicht verschlossen, während der Auslaßkanal 174 durch den Achsstab 64 ebenfalls dicht abgeschlossen ist. In der Arbeitskammer 74 befindet sich zuvor durch den Einlaßkanal 172 eingesaugtes Brennstoff-Luftgemisch, in der Arbeitskammer 76 maximal komprimiertes Brennstoff-Luftgemisch, das durch die Zündkerzen 168 und 170 gezündet wird, in der Arbeitskammer 78 befindet sich expandiertes verbranntes Brennstoff-Luftgemisch, während aus der Arbeitskammer 80 verbranntes Brennstoff-Luftgemisch durch den Auslaßkanal 174 bereits ausgestoßen worden ist.

In Fig. 5b) haben sich die Kolben 32, 34, 36 und 38 um 22,5° in der Umlaufrichtung 40 weiter bewegt. Während dieser Bewegung in der Umlaufrichtung 40 wurde der Kolben 34 mit seinen Laufflächen 100 und 102 ebenso wie die übrigen Kolben 32, 36 und 38 an der Außenkontur 90 des Kurvenstückes 88 unter ständiger Berührung mit derselben entlanggeführt. Aufgrund der Formgebung der Außenkontur sind die vier Kolben 32, 34, 36 und 38 dabei aus ihrer in Fig. 5a) dargestellten Endstellung in definierter Weise um ihre jeweilige Kolbenachse 58 verschwenkt wurden. Dementsprechend hat sich der Arbeitsraum 76 etwas vergrößert, so daß das darin befindliche gerade gezündete Brennstoff-Luftgemisch expandieren kann. Gleichzeitig hat sich der Arbeitsraum 78 etwas verkleinert, so daß das darin befindliche bereits zuvor gezündete Brennstoff-Luftgemisch durch den nunmehr von dem Achsstab 64 freigegebenen Auslaßkanal 166 ausgestoßen werden kann. Durch den Einlaßkanal 164 wird in den Arbeitsraum 74 frisches Brennstoff-Luftgemisch eingelassen, während das zuvor in den Arbeitsraum 74 eingelassene Brennstoff-Luftgemisch nunmehr durch eine entsprechende Schwenkbewegung der Kolben 32 und 34 verdichtet wird. In Fig. 5c) haben sich die Kolben 32, 34, 36 und 38 insgesamt um 45° gegenüber der in Fig. 5a) dargestellten Ausgangsstellung weiter bewegt. Die Arbeitskammern 74, 76, 78 und 80 sind in dieser Stellung der Kolben 32, 34, 36 und 38 etwa gleich groß. Die Lauffläche 100 des Kolbens 34 sowie die Laufflächen der übrigen Kolben 32, 36 und 38 haben sich dabei weiter auf der Außenkontur 90 des Kurvenstückes 88, weiterhin unter ständiger Berührung mit derselben, abgewälzt. Jeder der Kolben 32, 34, 36 und 38 befindet sich nun in einer Schwenkstellung, die in etwa der Mitte zwischen den beiden möglichen Endstellungen der Kolben 32, 34, 36 und 38 entspricht.

In Fig. 5d) haben sich die Kolben 30, 32, 34, 36 insgesamt um einen Winkel vom 67,5° in der Umlaufrichtung 40 weiter bewegt. Das in der Kammer 74 vorhandene Brennstoff-Luftgemisch wird durch eine entsprechende Schwenkbewegung der Kolben 34 und 36 weiter verdichtet, während das gezündete Brennstoff-Luftgemisch in der Kammer 76 weiter expandiert wird. Das zuvor in der Kammer 78 enthaltene verbrannte Brennstoffluftgemisch ist nunmehr fast vollständig aus dem Auslaßkanal 166 ausgestoßen worden, während die Kammer 80 fast ihr maximales Volumen erreicht hat und beinahe vollständig mit frischem Brennstoff-Luftgemisch durch den Einlaßkanal 164 gefüllt ist.

In Fig. 5e) haben sich die Kolben 32, 34, 36 und 38 insgesamt um 90° weiterbewegt, wobei nun eine Stellung erreicht ist, die von der in Fig. 5a) dargestellten Stellung nicht zu unterscheiden ist.

Aus dem in den Fig. 5a) bis 5e) dargestellten Bewegungsabläufen ist zu erkennen, daß die Schwenkbewegungen der einzelnen Kolben 32, 34, 36 und 38 dadurch, daß alle Laufflächen 100 und 102 der Kolben 32, 34, 36 und 38 die Außenkontur 90 des Kurvenstückes 88 unter ständiger Berührung mit derselben abfahren, exakt gesteuert sind.

Bei einem vollen Umlauf der Kolben 32, 34, 36 und 38 um 360° finden vier vollständige Viertakt-Zyklen statt.

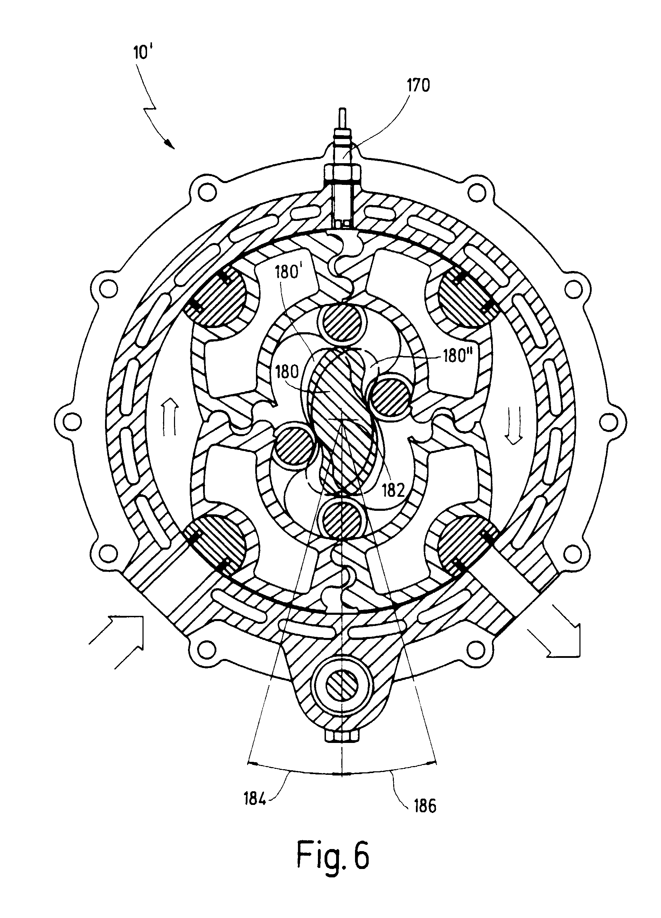

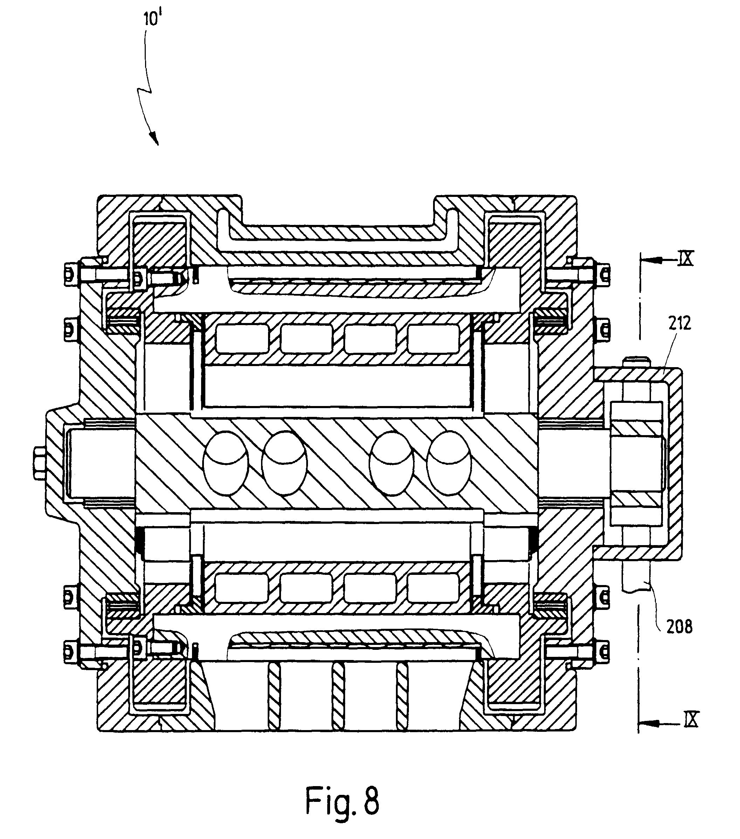

In Fig. 6 bis 9 ist ein weiteres Ausführungsbeispiel einer mit dem allgemeinen Bezugszeichen 10' versehenen Schwenkkolbenmaschine dargestellt.

Die einzelnen Elemente der Schwenkkolbenmaschine 10' sind mit Ausnahme der hiernach beschriebenen Merkmale mit denen der Schwenkkolbenmaschine 10 in Fig. 1 bis 5 identisch. Auch die Funktionsweise der Schwenkkolbenmaschine 10' entspricht prinzipiell der Funktionsweise der Schwenkkolbenmaschine 10 gemäß Fig. 5.

Im Unterschied zu der Schwenkkolbenmaschine 10 weist die Schwenkkolbenmaschine 10' in Fig. 6 ein Kurvenstück 180 auf, das um eine Gehäuseachse 182 verdrehbar und in einer verdrehten Position feststellbar ist. Abgesehen von der Verdrehbarkeit ist das Kurvenstück 180 wie das Kurvenstück 88 in Fig. 1 bis 5 als ortsfest anzusehen. Das Kurvenstück 180 ist gemäß einem Winkelbereich 184 im Uhrzeigersinn und gemäß einem Winkelbereich 186 gegen den Uhrzeigersinn verdrehbar. Der Winkelbereich 184 reicht von 0 bis etwa +15°, während der Winkelbereich 186 von 0 bis etwa -15° reicht. Innerhalb der beiden Winkelbereiche 184 und 186 kann das Kurvenstück 180 jede Position stufenlos einnehmen und in dieser Position festgestellt werden.

In Fig. 6 sind beispielhaft drei Positionen des Kurvenstückes 180 dargestellt. Die Normalstellung des Kurvenstückes 180 ist schraffiert dargestellt. In dieser Stellung, in der das Kurvenstück 180 nicht verdreht ist (0°), erfolgt die Zündung des Brennstoff-Luftgemisches genau dann, wenn sich die Schwenkkolbenmaschine 10' in ihrem oberen Totpunkt (OT) befindet.

Mit 180' ist eine Stellung des Kurvenstückes 180 bezeichnet, in der das Kurvenstück 180 entgegen dem Uhrzeigersinn aus seiner 0°-Lage um einen Winkel zwischen 0 und -15° verdreht ist. Dies hat zur Folge, daß der obere Totpunkt der Schwenkkolbenmaschine 10' gegenüber der feststehenden Zündkerze 170 entgegen dem Uhrzeigersinn vorverlegt ist. Unter der Annahme, daß die Zündkerze 170 zum gleichen Zeitpunkt wie bei der 0°-Lage einen Zündfunken emittiert, bewirkt die Vorverlegung des oberen Totpunktes bezüglich der Zündkerze 170 eine Spätzündung.

Entsprechend ist mit 180" eine Position des Kurvenstückes 180 dargestellt, in der das Kurvenstück 180 im Uhrzeigersinn um einen Winkel zwischen 0 und +15° verdreht ist. Unter der gleichen Annahme wie zuvor bewirkt dies eine Frühzündung der Schwenkkolbenmaschine 10'.

Es versteht sich, daß das Kurvenstück 180 bei Erreichen jeder Winkellage in dieser Lage blockiert ist, so daß der Lauf der Kolben entlang des Kurvenstückes 180 störungsfrei gewährleistet ist.

Die Verdrehung des Kurvenstückes 180 erfolgt in Abhängigkeit von der Drehzahl der Schwenkkolbenmaschine, wie dies zur Erreichung der besten Leistung der Schwenkkolbenmaschine 10' erforderlich ist.

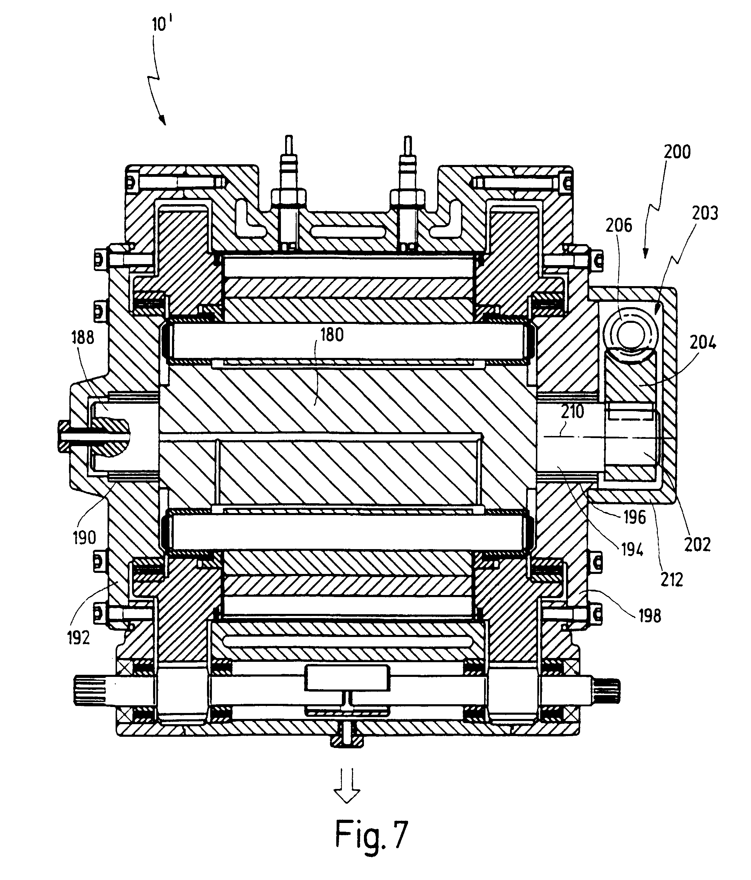

Mit Bezug auf Fig. 7 bis 9 werden nun Einzelheiten der Verdrehbarkeit des Kurvenstückes 180 näher erläutert.

Das Kurvenstück 180 weist an seinem linken Ende eine Welle 188 auf, die in einer Nabe 190 eines linken Gehäusedeckels 192 drehbar gelagert ist. Ebenso weist das Kurvenstück 180 an seinem rechten Ende eine Welle 194 auf, die in einer Nabe 196 eines rechten Gehäusedeckels 198 ebenfalls drehbar gelagert ist.

Die Schwenkkolbenmaschine 10' weist weiterhin einen mit dem allgemeinen Bezugszeichen 200 versehenen Verstellmechanismus auf. Der Verstellmechanismus 200 weist ein Schneckengetriebe 203 auf. Das Schneckengetriebe 203 wird durch ein Schneckenrad 206 als Antriebsrad und ein mit einem äußeren Ende 202 der Welle 194 verbundenes Zahnrad 204 gebildet. Das Schneckenrad 206 und das Zahnrad 204 stehen kämmend miteinander in Eingriff.

Das Schneckenrad 206 weist eine Achse 208 auf, die senkrecht zur Längsachse 210 des Kurvenstückes 180 bzw. zur Welle 94 angeordnet ist.

Der Verstellmechanismus 200 wird von einem Deckel 212 abgeschlossen.

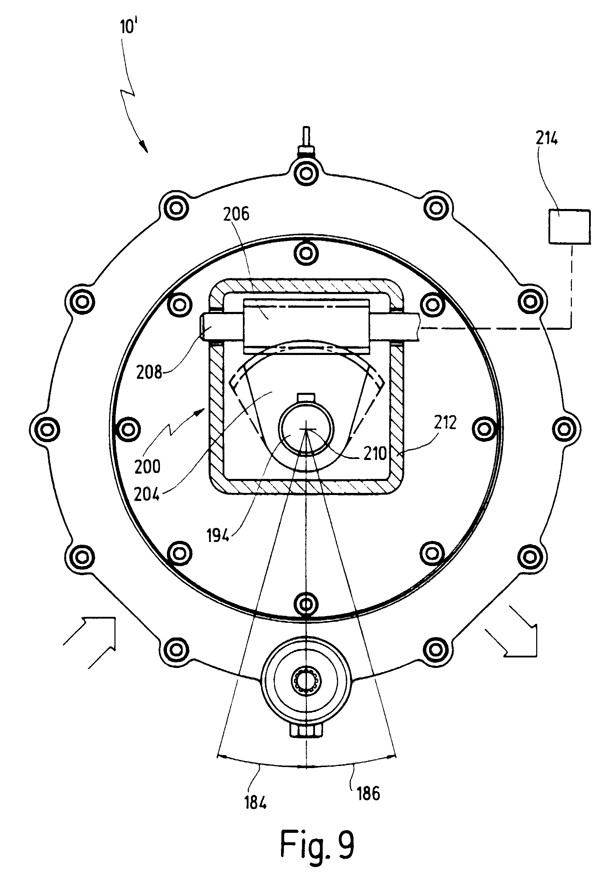

In Fig. 9 ist schematisch mit 214 ein Antrieb dargestellt, der das Schneckenrad 206 zur Verstellung des Kurvenstückes 180 in Vorwärts- bzw. Rückwärtsdrehung versetzt. Der Antrieb 214 ist außerdem selbstblockierend, um die Feststellung des Kurvenstückes 180 über das Schneckengetriebe 203 zu gewährleisten.

Der Antrieb 214 wird dabei elektronisch in Abhängigkeit von der Drehzahl der Schwenkkolbenmaschine 10' gesteuert, um, wie zuvor beschrieben, Früh- bzw. Spätzündungen in Abhängigkeit von der Drehzahl der Schwenkkolbenmaschine 10' zu ermöglichen.

In einer hier nicht dargestellten Ausführung ist anstelle der Verdrehbarkeit des Kurvenstückes 180 vorgesehen, auf dem Umfang der Schwenkkolbenmaschine 10 verteilt mehrere Zündkerzen, d.h. in Fig. 1 links und rechts neben der Zündkerze 170 vorzusehen. Mit dieser Ausgestaltung wird eine Früh- bzw. Spätzündung durch ein unterschiedliches Ansteuern der jeweiligen Zündkerzen zur Erzeugung eines Zündfunkens erreicht. Für eine Frühzündung wird der für die Zündung des Brennstoff-Luftgemisches erforderliche Zündfunken von der auf der linken Seite der Zündkerze 170 angeordneten Zündkerze emittiert, und für eine Spätzündung entsprechend von der auf der rechten Seite der Zündkerze 170 angeordneten Zündkerze. Auch bei dieser Ausgestaltung ist eine drehzahlabhängige Früh- bzw. Spätzündung möglich.

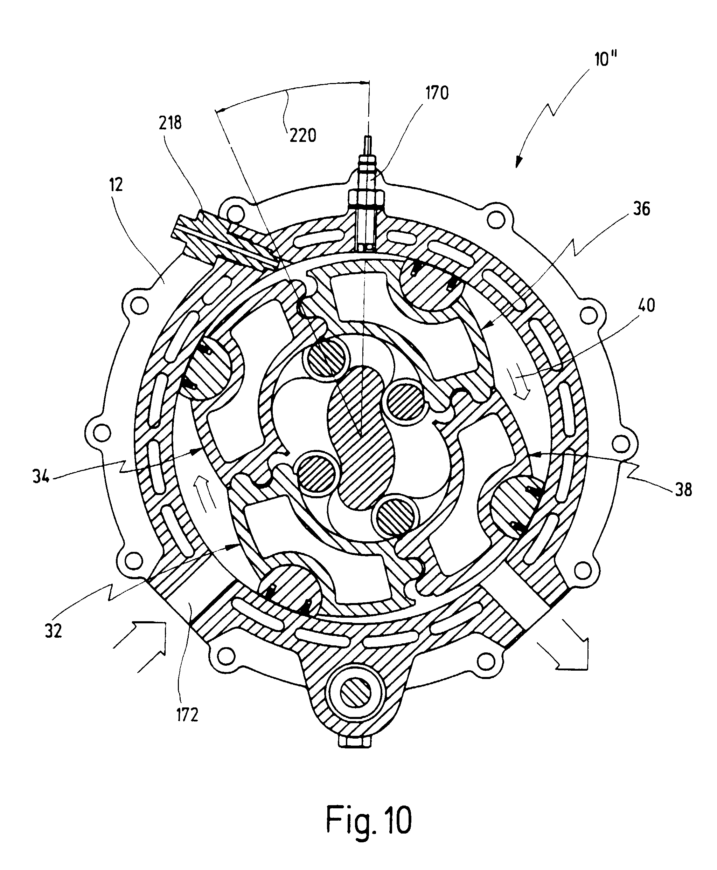

In Fig. 10 ist ein weiteres Ausführungsbeispiel einer mit dem allgemeinen Bezugszeichen 10" versehenen Schwenkkolbenmaschine dargestellt.

Die Schwenkkolbenmaschine 10" weist im Unterschied zu den zuvor beschriebenen Schwenkkolbenmaschinen 10 und 10' eine Kraftstoff-Einspritzdüse 218 auf. Die Kraftstoff-Einspritzdüse 218 ist in Umlaufrichtung 40 der Kolben 32, 34, 36, 38 in dem Gehäuse 12 vor dem durch die Zündkerze 170 gebildeten Zündpunkt angeordnet, und zwar in einem Umfangswinkel 220 von etwa 25°.

Bei der Schwenkkolbenmaschine 10" wird durch den Einlaßkanal 172 nur Verbrennungsluft angesaugt, während der Kraftstoff durch die Kraftstoff-Einspritzdüse 218 eingespritzt wird. Der durch die Kraftstoff-Einspritzdüse eingespritzte Kraftstoff wird durch die Kolbendrehung vor die Zündkerze 170 gewälzt und dort in idealer Weise zur Zündung gebracht.

Im übrigen ist die Schwenkkolbenmaschine 10" identisch mit der Schwenkkolbenmaschine 10 mit unverdrehbarem Kurvenstück 88 oder mit der Schwenkkolbenmaschine 10' mit verdrehbarem Kurvenstück 180 zur Veränderung des Zündzeitpunktes ausgebildet.

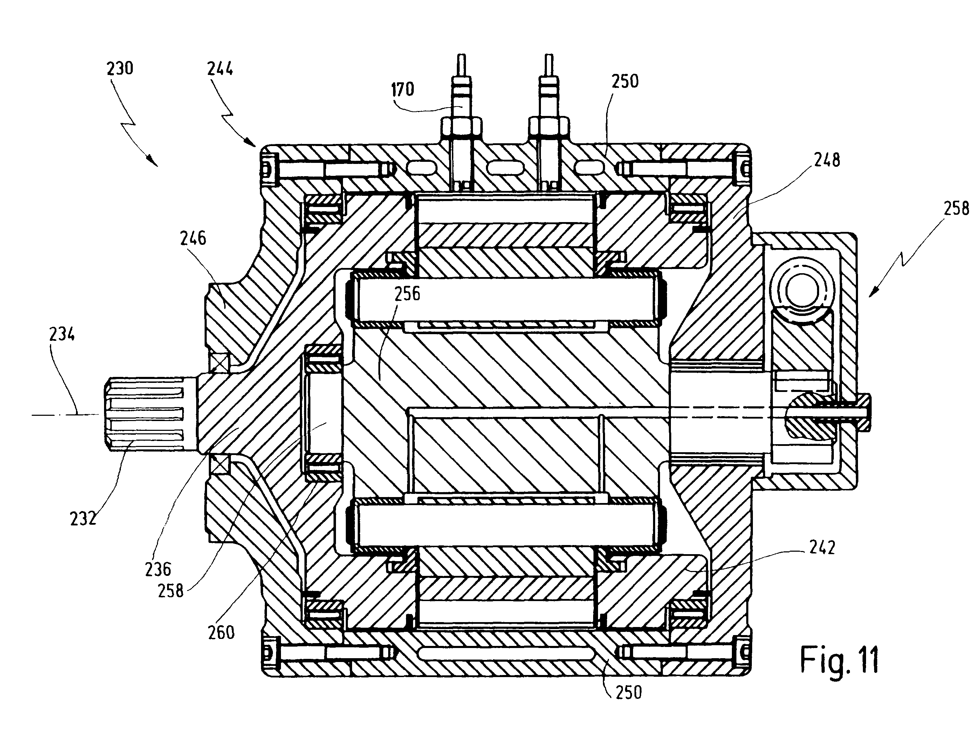

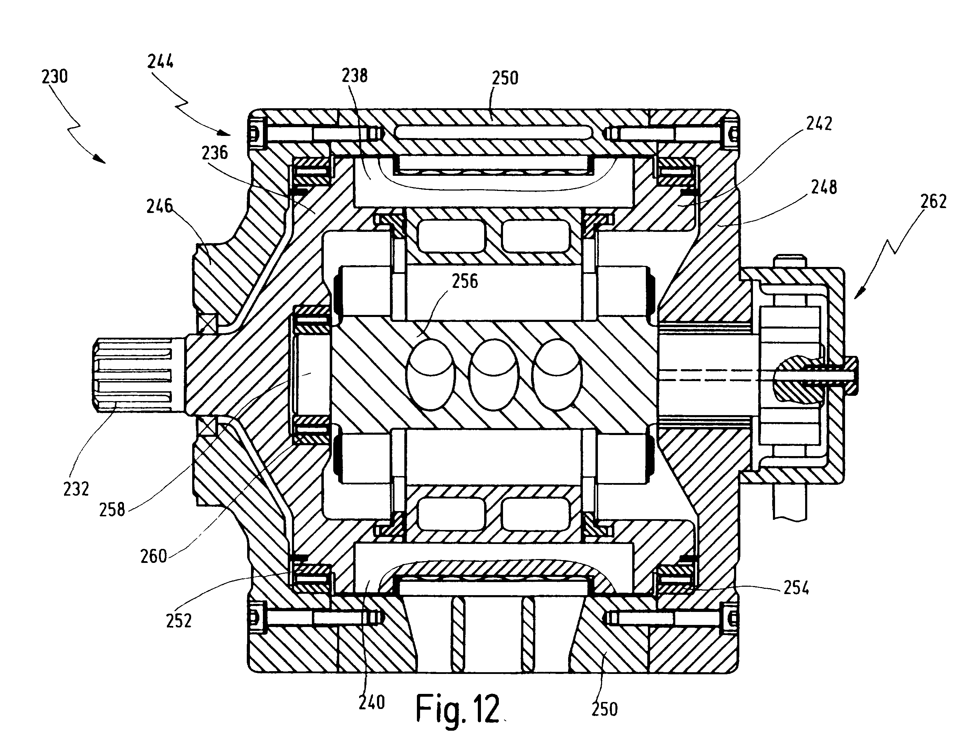

Fig. 11 und 12 zeigen ein weiteres Ausführungsbeispiel einer mit dem allgemeinen Bezugszeichen 230 versehenen Schwenkkolbenmaschine, die sich von den Schwenkkolbenmaschinen 10, 10' und 10" hinsichtlich der Geometrie einzelner Bauelemente unterscheidet. Hinsichtlich ihres Funktionsprinzips entspricht die Schwenkkolbenmaschine 230 jedoch den zuvor beschriebenen Schwenkkolbenmaschinen 10, 10' oder 10".

Die Schwenkkolbenmaschine 230 weist eine Abtriebswelle 232 auf, die konzentrisch zur Gehäuseachse 234 angeordnet ist. Die Abtriebswelle 232 ist auf einer Außenseite eines ersten Ringkörpers 236 als Wellenflansch ausgebildet. Der erste Ringkörper 236 ist über vier umfänglich gleich verteilte Achsstäbe 238, 240 (vgl. Fig. 12) mit einem zweiten Ringkörper 242 fest verbunden.

Die Ringkörper 236 und 242 und die vier Achsstäbe 238, 240 bilden eine Einheit, deren Außendurchmesser axial durchgehend konstant ist. Die Achsstäbe 238, 240 dienen wie bei den vorherigen Ausführungsbeispielen als Lager für die Schwenkkolben, worauf daher an dieser Stelle nicht näher eingegangen werden soll.

Diese Einheit aus den Ringkörpern 236, 242 und den Achsstäben 238, 240 ist in einem Gehäuse 244 aufgenommen, das aus zwei axial abschließenden Gehäusedeckeln 246 und 248 sowie einem zylindrischen Gehäuseteil 250 gebildet wird, wobei das zylindrische Gehäuseteil 250 eine kreisförmige Innenwand mit durchgehend konstantem Querschnitt aufweist. Die Gehäuseinnenwand ist mit anderen Worten hinsichtlich ihres Durchmessers durchgehend homogen.

Der erste Ringkörper 236 ist über einen Lagerring 252 und der zweite Ringkörper 242 über einen Lagerring 254 drehbar in dem Gehäuse 244 gelagert.

Weiterhin greift in den ersten Ringkörper 236 ein Kurvenstück 256 über einen Wellenflansch 258 ein und ist darin ruhend gelagert, wobei sich der Ringkörper 236 über einen Lagerring 260 um das Kurvenstück 256 dreht.

Das Kurvenstück 256 ist über einen Verstellmechanismus 262 zur Verstellung des Zündzeitpunktes verdrehbar, wobei der Verstellmechanismus 262 in Ausgestaltung und Funktion dem Verstellmechanismus 200 in Fig. 6 bis 9 entspricht.

Die Baueinheit aus dem ersten Ringkörper 236 mit der Abtriebswelle 233, aus den Achsstäben 238, 240 und dem Kurvenstück 256 kann als Ganzes nach Öffnen des Gehäusedeckels 246 aus dem Gehäuse 244 herausgezogen werden. Umgekehrt kann diese Baueinheit außerhalb des Gehäuses 244 vormontiert und als Ganzes in das Gehäuse 244 eingeschoben werden.

## Patentansprüche

1. Schwenkkolbenmaschine, mit einem Gehäuse (12; 244) mit einer kreisförmigen Innenwand (52), in dem mehrere als zweiarmige Hebel ausgebildete Kolben (32, 34, 36, 38), von denen jeweils zwei benachbarte Kolben (32, 34, 36, 38) miteinander in Wälzeingriff stehen, um jeweils eine zu einer mittigen Gehäuseachse (42; 182; 234) parallele Kolbenachse (58) verschwenkbar angeordnet und gemeinsam in einer Umlaufrichtung (40) beweglich sind, wobei die Kolbenachsen (58) auf einer zur Innenwand (52) des Gehäuses (12; 244) konzentrischen Kreisbahn um die Gehäuseachse (42; 182; 234) umlaufen, dadurch gekennzeichnet, daß mittig in dem Gehäuse (12) ein gehäusefestes Kurvenstück (88; 180; 256) angeordnet ist, wobei auf den dem Kurvenstück (88; 180; 256) zugewandten Seiten (70) der Kolben (32, 34, 36, 38) Laufflächen (100, 102) ausgebildet sind, die beim Umlaufen der Kolben (32, 34, 36, 38) entlang einer Außenkontur (90) des Kurvenstückes (88; 180; 256) unter ständiger Berührung mit derselben derart geführt sind, daß die Schwenkbewegungen der Kolben (32, 34, 36, 38) während des Umlaufens, unabhängig von der Umlaufgeschwindigkeit, ausschließlich durch die Führung der Kolben (32, 34, 36, 38) entlang der Außenkontur (90) des Kurvenstückes (88; 180; 256) in Zusammenwirken mit dem Wälzeingriff gesteuert sind.

2. Schwenkkolbenmaschine nach Anspruch 1, dadurch gekennzeichnet, daß die Außenkontur (90) des Kurvenstückes (88; 180; 256) genau der während eines vollen Umlaufes der Kolben (32, 34, 36, 38) von einem der Gehäuseachse (42; 182; 234) am nächsten liegenden Punkt (104) der Laufflächen (100, 102) beschriebenen Bahnkurve entspricht, der sich aus der Überlagerung der Schwenk- und Umlaufbewegung der Kolben (32, 34, 36, 38) bei einem vollen Umlauf ergibt.

3. Schwenkkolbenmaschine nach Anspruch 1 oder 2, dadurch gekennzeichnet, daß sich das Kurvenstück (88; 180; 256) axial über etwa die gesamte Länge des Gehäuses (12; 244) erstreckt, wobei sich jedoch die Laufflächen (100, 102) der Kolben (32, 34, 36, 38) und die Außenkontur (90) des Kurvenstückes (88; 180; 256) nur in axial begrenzten Bereichen berühren.

4. Schwenkkolbenmaschine nach einem der Ansprüche 1 bis 3, dadurch gekennzeichnet, daß die Laufflächen (100, 102) an einem Ende (65) eines der beiden Hebelarme (44, 46) der Kolben (32, 34, 36, 38) angeordnet sind.

5. Schwenkkolbenmaschine nach einem der Ansprüche 1 bis 4, dadurch gekennzeichnet, daß die Laufflächen (100, 102) der Kolben (32, 34, 36, 38) Oberflächen von drehbar an den Kolben (32, 34, 36, 38) befestigten Walzen (84, 86) sind.

6. Schwenkkolbenmaschine nach Anspruch 5, dadurch gekennzeichnet, daß die Walzen (84, 86) zylindrisch sind und einen Halbdurchmesser aufweisen, der geringer als der Krümmungsradius von konkaven Abschnitten (94) des Kurvenstückes (88; 180) ist.

7. Schwenkkolbenmaschine nach einem der Ansprüche 1 bis 4, dadurch gekennzeichnet, daß die Laufflächen (100, 102) Oberflächen von kolbenfesten Gleitstücken sind.

8. Schwenkkolbenmaschine nach Anspruch 7, dadurch gekennzeichnet, daß die Laufflächen (100, 102) zumindest in den Bereichen, die mit der Außenkontur (90) des Kurvenstückes (88; 180) in Berührung stehen, teilkreisförmig ausgebildet sind.

9. Schwenkkolbenmaschine nach einem der Ansprüche 1 bis 8, dadurch gekennzeichnet, daß die Kolben (32, 34, 36, 38) jeweils an einem sich axial erstreckenden Achsstab (56, 60, 62, 64; 238, 240) gelagert sind, wobei die Achsstäbe (56, 60, 62, 64; 238, 240) endseitig mit jeweils einem in Umlaufrichtung (40) beweglichen Ringkörper (106, 108; 236, 242) verbunden sind.

10. Schwenkkolbenmaschine nach Anspruch 9, dadurch gekennzeichnet, daß zumindest einer der Ringkörper (106, 108) eine Außenverzahnung (120, 122) aufweist, die mit einer entsprechenden Außenverzahnung (124, 126) einer parallel zur Gehäuseachse (42) verlaufenden und exzentrisch zu dieser angeordneten Abtriebswelle (128) kämmt.

11. Schwenkkolbenmaschine nach einem der Ansprüche 1 bis 10, dadurch gekennzeichnet, daß die Kolben (32, 34, 36, 38) an ihren axialen Enden axial nach außen durch eine Dichtung (132, 134) abgedichtet sind, die mehrere axial nach innen vorstehende Dichtwülste (152, 154, 158) aufweist, die an den Kolben (32, 34, 36, 38) dichtend anliegen.

12. Schwenkkolbenmaschine nach einem der Ansprüche 1 bis 11, dadurch gekennzeichnet, daß das Kurvenstück (180; 256) um die Gehäuseachse (182; 234) zur Veränderung des Zündzeitpunkts verdrehbar und in einer verdrehten Position feststellbar ist.

13. Schwenkkolbenmaschine nach Anspruch 12, dadurch gekennzeichnet, daß das Kurvenstück (180; 256) stufenlos über einen Winkelbereich (184, 186) von etwa ± 15° verdrehbar ist.

14. Schwenkkolbenmaschine nach Anspruch 12 oder 13, dadurch gekennzeichnet, daß das Kurvenstück (180; 256) in Abhängigkeit von der Drehzahl der Schwenkkolbenmaschine (10') verdrehbar ist.

15. Schwenkkolbenmaschine nach Anspruch 14, dadurch gekennzeichnet, daß für das Kurvenstück (180; 256) ein Verstellmechanismus (200; 262) vorgesehen ist, der ein Schneckengetriebe (203) aufweist.

16. Schwenkkolbenmaschine nach Anspruch 14 oder 15, dadurch gekennzeichnet, daß der Verstellmechanismus (200; 262) elektronisch in Abhängigkeit von der Drehzahl der Schwenkkolbenmaschine (10'; 10"; 230) gesteuert ist.

17. Schwenkkolbenmaschine nach einem der Ansprüche 1 bis 11, dadurch gekennzeichnet, daß die Schwenkkolbenmaschine (10) mehrere umfänglich beabstandet angeordnete Zündkerzen (170) aufweist, die jeweils in Abhängigkeit von der Drehzahl der Schwenkkolbenmaschine (10) zur Erzeugung eines Zündfunkens unterschiedlich angesteuert werden.

18. Schwenkkolbenmaschine nach einem der Ansprüche 1 bis 17, dadurch gekennzeichnet, daß sie eine Kraftstoff-Einspritzdüse (218) aufweist, die in Umlaufrichtung (40) der Kolben (32, 34, 36, 38) in einem Umfangswinkel (220) von etwa 25° vor dem Zündpunkt angeordnet ist.

19. Schwenkkolbenmaschine nach einem der Ansprüche 1 bis 9, 11 bis 18, soweit diese nicht auf Anspruch 10 rückbezogen sind, dadurch gekennzeichnet, daß sie eine konzentrisch zur Gehäuseachse (234) angeordnete Abtriebswelle (232) aufweist.

20. Schwenkkolbenmaschine nach Anspruch 9 und 19, dadurch gekennzeichnet, daß der erste Ringkörper (236) auf einer Außenseite zentrisch die Abtriebswelle (232) aufweist und auf der gegenüberliegenden Seite über die Achsstäbe (238), (240) mit dem zweiten Ringkörper (242) fest verbunden ist.

21. Schwenkkolbenmaschine nach Anspruch 20, dadurch gekennzeichnet, daß das Kurvenstück (256) in dem ersten Ringkörper (236), der die Abtriebswelle (232) aufweist, eingreift und von diesem gehäusefest gehalten wird.

22. Schwenkkolbenmaschine nach Anspruch 20 oder 21, dadurch gekennzeichnet, daß die Ringkörper (236, 242) und die Achsstäbe (238, 240) eine zylindrische Einheit mit einem axial durchgehend konstanten Außendurchmesser bilden.

## Claims

1. An oscillating-piston engine having a housing (12; 244) with a circular inner wall (52) in which several pistons (32, 34, 36, 38) configured as two-armed levers, of which each two adjacent pistons (32, 34, 36, 38) are in rolling engagement with one another, are each arranged pivotably about a piston axis (58) parallel to a central housing axis (42; 182; 234) and are movable together in a revolution direction (40), the piston axes (58) revolving about the housing axis (42; 182; 234) on a circular track concentric with the inner wall (52) of the housing (12; 244), characterized in that
a cam piece (88; 180; 256) immovable with respect to the housing is arranged centrally in the housing (12), there being configured, on the sides (70) of the pistons (32, 34, 36, 38) facing the cam piece (88; 180; 256), running surfaces (100, 102) which, as the pistons (32, 34, 36, 38) revolve along an outer contour (90) of the cam piece (88; 180; 256), are guided in constant contact therewith in such a way that the pivoting movements of the pistons (32, 34, 36, 38) during revolution are controlled, regardless of the revolution speed, exclusively by the guidance of the pistons (32, 34, 36, 38) along the outer contour (90) of the cam piece (88; 180; 256) in coation with the rolling engagement.

2. The oscillating-piston engine of Claim 1, characterized in that the outer contour (90) of the cam piece (88; 180; 256) corresponds exactly to the trajectory, during one complete revolution of the pistons (32, 34, 36, 38), of a point (104) on the running surfaces (100, 102) located closest to the housing axis (42; 182; 234), said trajectory resulting from the superposition of the pivoting and revolving movements of the pistons (32, 34, 36, 38) during one full revolution.

3. The oscillating-piston engine of Claim 1 or 2, characterized in that the cam piece (88; 180; 256) extends axially over approximately the entire length of the housing (12; 244), but the running surfaces (100, 102) of the pistons (32, 34, 36, 38) and the outer contour (90) of the cam piece (88; 180; 256) are in contact only in axially limited regions.

4. The oscillating-piston engine of one of Claims 1 through 3, characterized in that the running surfaces (100, 102) are arranged at one end (65) of one of the two lever arms (44, 46) of the pistons (32, 34, 36, 38).

5. The oscillating-piston engine of one of Claims 1 through 4, characterized in that the running surfaces (100, 102) of the pistons (32, 34, 36, 38) are surfaces of rollers (34, 86) mounted rotatably on the pistons (32, 34, 36, 38).

6. The oscillating-piston engine of Claim 5, characterized in that the rollers (84, 86) are cylindrical and have a semidiameter which is less than the radius of curvature of concave segments (94) of the cam piece (88; 180).

7. The oscillating-piston engine of one of Claims 1 through 4, characterized in that the running surfaces (100, 102) are surfaces of piston-mounted sliding elements.

8. The oscillating-piston engine of Claim 7, characterized in that the running surfaces (100, 102) are of partially circular configuration at least in the regions which are in contact with the outer contour (90) of the cam piece (88; 180).

9. The oscillating-piston engine of one of Claims 1 through 8, characterized in that the pistons (32, 34, 36, 38) are each mounted on an axially extending journal rod (56, 60, 62, 64; 238, 240), the journal rods (56, 60, 62, 64; 238, 240) being joined at their ends to respective annular elements ((106, 108; 236, 242) that are movable in the revolution direction (40).

10. The oscillating-piston engine of Claim 9, characterized in that at least one of the annular elements (106, 108) has an external tooth set (120, 122) which meshes with a corresponding external tooth set (124, 126) of an output shaft (128) running parallel to the housing axis (42) and arranged eccentrically with it.

11. The oscillating-piston engine of one of Claims 1 through 10, characterized in that the pistons (32, 34, 36, 38) are axially externally sealed at their axial ends by a seal (132, 134) which has multiple axially inwardly projecting sealing ridges (152, 154, 158) which rest sealingly against the pistons (32, 34, 36, 38).

12. The oscillating-piston engine of one of Claims 1 through 11, characterized in that the cam piece (180; 256) is rotatable about the housing axis (182; 234) in order to change the ignition point, and can be locked in a rotated position.

13. The oscillating-piston engine of Claim 12, characterized in that the cam piece (180; 256) is rotatable steplessly through an angular range (184, 186) of approximately +/- 15 degrees.

14. The oscillating-piston engine of Claim 12 or 13, characterized in that the cam piece (180; 256) is rotatable as a function of the rotation speed of the oscillating-piston engine (10').

15. The oscillating-piston engine of Claim 14, characterized in that an adjustment mechanism (200; 262) for the cam piece (180; 250) having a worm drive (203) is provided.

16. The oscillating-piszon engine of Claim 14 or 15, characterized in that the adjustment mechanism, (200; 262) is controlled electronically as a function of the rotation speed of the oscillating-piston engine (10'; 10"; 230).

17. The oscillating-piston engine of one of Claims 1 through 11, characterized in that the oscillating-piston engine (10) has multiple spark plugs (170), arranged in circumferentially spaced fashion, which are respectively variously activated as a function of the rotation speed of the oscillating-piston engine (10) in order to generate an ignition spark.

18. The oscillating-piston engine of one of Claims 1 through 17, characterized in that it has a fuel injection nozzle (218) which is arranged at a circumferential angle (220) of approximately 25 degrees before the ignition point in the revolution direction (40) of the pistons (32, 34, 36, 38).

19. The oscillating-piston engine of one of Claims 1 through 9 or 11 through 18, provided such claims do not refer back to Claim 10, characterized in that it has an output shaft (232) arranged concentrically with the housing axis (234).

20. The oscillating-piston engine of Claim 9 and 19, characterized in that the first annular element (236) bears the output shaft (232) centeredly on one outer side, and on the opposite side is joined immovably to one second annular element (242) via the journal rods (238, 240).

21. The oscillating-piston engine of Claim 20, characterized in that the cam piece (256) engages into the first annular element (236) which bears the output shaft (232), and is retained by the latter immovably with respect to the housing.

22. The oscillating-piston engine of Claim 20 or 21, characterized in that the annular elements (236, 242) and the journal rods (238, 240) form a cylindrical unit with an axially continuously constant outside diameter.

## Revendications

1. Machine à pistons oscillants, comportant un carter (12 ; 244) avec une paroi intérieure circulaire (52), dans lequel plusieurs pistons (32, 34, 36, 38) qui sont réalisés sous la forme de leviers à deux bras et dont deux pistons voisins (32, 34, 36, 38) sont en engagement de roulement entre eux, sont disposés de manière à pouvoir osciller chacun autour d'un axe de piston (58) paralllèle à un axe central (42 ; 182 ; 234) du carter et sont mobiles conjointement dans un sens de rotation (40), les axes de piston (58) tournant autour de l'axe (42 ; 182 ; 234) du carter, sur une trajectoire circulaire concentrique à la paroi intérieure (52) du carter (12 ; 244), caractérisée en ce qu'au milieu du carter (12) est disposée une came (88 ; 180 ; 256) solidaire du carter (12), sur les côtés (70) des pistons (32, 34, 36, 38), tournés vers la came (88 ; 180 ; 256) étant formées des surfaces de roulement (100, 102), qui lors de la rotation des pistons (32, 34, 36, 38) le long d'un contour extérieur (90) de la came (88 ; 180 ; 256) sont guidées, avec contact permanent avec celui-ci, de manière que les mouvements d'oscillation des pistons (32, 34, 36, 38) pendant la rotation soient commandés indépendamment de la vitesse de rotation, uniquement par le guidage des pistons (32, 34, 36, 38) le long du contour extérieur (90) de la came (88 ; 180 ; 256) en coopération avec l'engagement de roulement.

2. Machine à pistons oscillants selon la revendication 1, caractérisée en ce que le contour extérieur (90) de la came (88 ; 180 ; 258) correspond exactement à la trajectoire décrite pendant une rotation complète des pistons (32, 34, 36, 38), par un point (104) des surfaces de roulement (100, 102) situé le plus près de l'axe (42 ; 182 ; 234) du carter, trajectoire qui résulte de la superposition du mouvement d'oscillation et de rotation des pistons (32, 34, 36, 38) lors d'une rotation complète.

3. Machine à pistons oscillants selon la revendication 1 ou 2, caractérisée en ce que la came (88 ; 180 ; 256) s'étend axialement à peu près sur toute la longueur du carter (12 ; 244), les surfaces de roulement (100, 102) des pistons (32, 34, 36, 38) et le contour extérieur (90) de la came (88 ; 180 ; 256) ne se touchant toutefois que dans des zones limitées axialement.

4. Machine à pistons oscillants selon l'une des revendications 1 à 3, caractérisée en ce que les surfaces de roulement (100, 102) sont disposées à une extrémité (65) de l'un des deux bras de levier (44, 46) des pistons (32, 34, 36, 38).

5. Machine à pistons oscillants selon l'une des revendications 1 à 4, caractérisée en ce que les surfaces de roulement (100, 102) des pistons (32, 34, 36, 38) sont des surfaces de rouleaux (84, 86) fixés aux pistons (32, 34, 36, 38) de manière à pouvoir tourner.

6. Machine à pistons oscillants selon la revendication 5, caractérisée en ce que les rouleaux (84, 86) sont cylindriques et présentent un demi-diamètre qui est inférieur au rayon de courbure de parties concaves (94) de la came (88 ; 180).

7. Machine à pistons oscillants selon l'une des revendications 1 à 4, caractérisée en ce que les surfaces de roulement (100, 102) sont des surfaces de pièces coulissantes solidaires des pistons.

8. Machine à pistons oscillants selon la revendication 7, caractérisée en ce que les surfaces de roulement (100, 102) sont en forme d'arc de cercle au moins dans les zones qui sont en contact avec le contour extérieur (90) de la came (88 ; 180).

9. Machine à pistons oscillants selon l'une des revendications 1 à 8, caractérisée en ce que les pistons (32, 34, 36, 38) sont montés chacun sur une barre axiale (56, 60, 62, 64 ; 238, 240) s'étendant axialement, les barres axiales (56, 60, 62, 64 ; 238, 240) étant reliées chacune à une extrémité avec un corps annulaire (106, 108 ; 236, 242) déplaçable dans le sens de rotation (40).

10. Machine à pistons oscillants selon la revendication 9, caractérisée en ce qu'au moins l'un des corps annulaires (106, 108) présente une denture extérieure (120, 122) qui engrène avec une denture extérieure (124, 126) correspondante d'un arbre mené (128) s'étendant parallèlement à l'axe (42) du carter et disposée excentrée par rapport à celui-ci.

11. Machine à pistons oscillants selon l'une des revendications 1 à 10, caractérisée en ce que les pistons (32, 34, 36, 38) sont rendus étanches axialement vers l'extérieur, à leurs extrémités axiales, par un joint d'étanchéité (132, 134) qui présente plusieurs bourrelets d'étanchéité (152, 154, 158) faisant saillie axialement vers l'intérieur, qui s'appliquent contre les pistons (32, 34, 36, 38) de manière étanche.

12. Machine à pistons oscillants selon l'une des revendications 1 à 11, caractérisée en ce que la came (180 ; 256) peut tourner autour de l'axe (182 ; 234) du carter en vue de la variation de l'instant d'allumage et peut être fixée dans une position tournée.

13. Machine à pistons oscillants selon la revendication 12, caractérisée en ce que la came (180 ; 256) peut tourner en continu sur une plage angulaire (184, 186) d'environ ± 15°.

14. Machine à pistons oscillants selon la revendication 12 ou 13, caractérisée en ce que la carne (180 ; 256) peut tourner en fonction de la vitesse de rotation de la machine à pistons oscillants (10').

15. Machine à pistons oscillants selon la revendication 14, caractérisée en ce que pour la came (180 ; 256) il est prévu un mécanisme de réglage (200 ; 262) qui comporte un engrenage à vis sans fin (203).

16. Machine à pistons oscillants selon la revendication 14 ou 15, caractérisée en ce que le mécanisme de réglage (200 ; 262) est commandé électroniquement en fonction de la vitesse de rotation de la machine à pistons oscillants (10'; 10" ; 230).

17. Machine à pistons oscillants selon l'une des revendications 1 à 11, caractérisée en ce que la machine à pistons oscillants (10) comporte plusieurs bougies d'allumage (170) disposées espacées périphériquement, qui sont commandées différemment en fonction de la vitesse de rotation de la machine à pistons oscillants (10) pour produire une étincelle d'allumage.

18. Machine à pistons oscillants selon l'une des revendications 1 à 17, caractérisée en ce qu'elle comporte une buse d'injection de carburant (218), qui est disposée dans le sens de rotation (40) des pistons (32, 34, 36, 38), devant le point d'allumage, dans une plage angulaire périphérique (220) d'environ 25°.

19. Machine à pistons oscillants selon l'une des revendications 1 à 9, 11 à 18, sauf si celles-ci se réfèrent à la revendication 10, caractérisée en ce qu'elle comporte un arbre mené (232) disposé concentriquement à l'axe (234) du carter.

20. Machine à pistons oscillants selon les revendications 9 et 19, caractérisée en ce que le premier corps annulaire (236) présente, centré sur un côté extérieur, l'arbre mené (232) et sur le côté opposé, le premier corps annulaire (236) est relié fixement au deuxième corps annulaire (242) par les barres axiales (238), (240).

21. Machine à pistons oscillants selon la revendication 20, caractérisée en ce que la came (256) s'engage dans le premier corps annulaire (236) qui présente l'arbre mené (232), et est maintenue solidaire avec le carter, par ce corps annulaire.

22. Machine à pistons oscillants selon la revendication 20 ou 21, caractérisée en ce que les corps annulaires (236, 242) et les barres axiales (238, 240) forment une unité cylindrique avec un diamètre extérieur axialement constant de bout en bout.
